# EUROPÄISCHE PATENTSCHRIFT

(11) **EP 2 342 297 B1**
(45) Veröffentlichungstag und Bekanntmachung des Hinweises auf die Patenterteilung: **30.09.2015**
(21) Anmeldenummer: 09777940.9
(22) Anmeldetag: 18.08.2009
(51) Int. Cl.: C09C 1/62, C09D 5/36, C09D 7/12, C09D 11/037, C08K 3/22, C09D 17/00, C09C 1/00, C08K 9/02

(54) **METALLEFFEKTPIGMENTPRÄPARATION IN KOMPAKTIERTER FORM, VERFAHREN ZU DEREN HERSTELLUNG UND VERWENDUNG DERSELBEN**
METALLIC PIGMENT PREPARATION IN COMPACTED FORM, METHOD FOR PRODUCING THE SAME AND USE THEREOF
PRÉPARATION DE PIGMENTS À EFFET MÉTALLIQUE SOUS FORME COMPACTE, PROCÉDÉ DE PRODUCTION ET UTILISATION DE CETTE PRÉPARATION

(30) Priorität: 16.09.2008 DE 102008047572
(43) Veröffentlichungstag der Anmeldung: 13.07.2011
(73) Patentinhaber: Eckart GmbH, 91235 Hartenstein (DE)
(72) Erfinder: ALBRECHT, Alexander, 91077 Dormitz (DE); SPERNER, Kerstin, 91224 Pommelsbrunn-Hohenstadt (DE)
(74) Vertreter: Walcher, Armin
(86) Internationale Anmeldenummer: PCT/EP2009/005972
(87) Internationale Veröffentlichungsnummer: WO 2010/031476

(56) Entgegenhaltungen:
- EP-A2- 1 153 995
- WO-A1-02/22749
- WO-A2-2006/066825
- DE-A1-102004 049 203
- US-A1- 2003 066 458
- US-A1- 2007 060 668

## Beschreibung

Die Erfindung betrifft eine Pigmentpräparation mit Metalleffektpigmenten in kompaktierter Form, ein Verfahren zur Herstellung dieser Pigmentpräparation sowie deren Verwendung.

Zur Herstellung metalleffektpigmenthaltiger flüssiger Lacke, Farben, Anstrichstoffe, Dispersionsfarben und Druckfarben oder zur Einfärbung von Kunststoffen werden plättchenförmige Metalleffektpigmente meist als trockene Pulver oder als Pasten in die jeweilige Formulierung eingearbeitet. Metalleffektpigmentpasten enthalten hierbei meist organisches Lösungsmittel und/oder Wasser als Anpastungsmedium. Der Verfahrensschritt der Pigmenteinarbeitung weist jedoch bei diesen beiden Darreichungsformen des Metalleffektpigmentes entscheidende Nachteile auf. Metalleffektpigmentpulver erzeugen eine erhebliche Staubbelastung an der Produktionsstätte, was zu erhöhten Anforderungen an die Arbeitsplatzsicherheit führt. Metalleffektpigmentpasten zeigen Nachteile bei der Dosierung und erzeugen im Fall von organischen Lösemitteln als Anpastungsmedium eine erhebliche Geruchsbelästigung an der Produktionsstätte und tragen zu erhöhter VOC-Belästung der Umwelt bei. Ferner entstehen bei beiden Darreichungsformen Nachteile im Transport aufgrund des erheblichen Gefahrenpotentials einer Staubexplosion bzw. der Brennbarkeit von organischem Lösemittel.

Herkömmliche Metalleffektpigmentpasten zeigen insbesondere im feineren Korngrößenbereich, d.h. bei Metalleffektpigmenten mit geringerem Pigmentdurchmesser, schon bei kürzeren Lagerzeiten von mehreren Wochen bis wenigen Monaten eine Tendenz zur Aggregation, also zur Bildung verwachsener, flächig aneinander gelagerter Primärteilchen, die bei der Einarbeitung in das jeweilige Endprodukt nicht rückgängig gemacht werden kann. Eine geringe garantierbare Lagerstabilität ist die Folge. Des Weiteren ist eine homogene Verteilung eines Metalleffektpigmentpulvers im jeweiligen Anwendungsmedium oft nur schwer zu erreichen oder gar nicht möglich. Es treten beispielsweise in Lacken oder Kunststoffen Agglomerate des Pigmentpulvers auf, die unter normalen Verarbeitungsbedingungen nicht deagglomeriert werden können.

Bei der Verarbeitung in wässrigen Anwendungsmedien ist es stets notwendig, Metalleffektpigmentpulver oder Metalleffektpigmentpasten in geeigneten Colösern anzuschlämmen, um eine optimale Pigmentdispergierung zu gewährleisten. Erst die Einarbeitung dieser Aufschlämmung in die wässrige Lackformulierung gewährleistet eine homogene Verteilung der Pigmente in der Lackformulierung und damit die Ausprägung des gewünschten Farbtons bzw. Metalleffektes.

Andererseits ist es gerade im Zuge der Anstrengungen zur Verminderung der VOC-Belastungen (VOC: volatile organic compound) ein dringendes Bedürfnis, auch in Wasserlacken den Anteil organischer Lösemittel weiter deutlich zu reduzieren.

Somit besteht ein Bedarf an weitgehend lösemittelfreien Darreichungsformen von Metalleffektpigmenten für Wasserlacke.

Viele der genannten Nachteile können durch eine meist trockene Pigmentpräparation umgangen oder gelindert werden.

In der EP 1 517 934 A1 werden Pigmentpräparationen beschrieben, die neben Pigment bestimmte oberflächenaktive Substanzen enthalten, die jedoch anionischen oder nichtionischen Charakter aufweisen oder aus Mischungen aus beiden bestehen. Diese Präparationen zeichnen sich durch leichte Dispergierbarkeit in verschiedensten Anwendungsmedien aus. Nachteiligerweise ist es jedoch nicht möglich, aus diesen Pigmentpräparationen formstabile kompaktierte Darreichungsformen bereitzustellen. Ein weiterer Nachteil dieser Pigmentpräparationen liegt in dem hohen Gehalt an anionischen sowie gegebenenfalls nichtionischen Additiven, die einen unerwünschten Einfluß auf das Lack- oder Farbsystem haben können, in das die Pigmentpräparation eingearbeitet wird.

Ferner wird im Hinblick auf das Verfahren zur Herstellung der Pigmentzubereitung eine Nasszerkleinerung in wässriger Suspension beschrieben. Im Falle des Einsatzes von plättchenförmigen Metallpigmenten wird durch die eintretende mechanische Zerkleinerung die Primärkorngröße des an sich fertig hergestellten Pigmentes, beispielsweise der mit den gewünschten Beschichtungen versehenen Metallplättchensubstraten, so stark verändert, dass die für die Anwendung gewünschten Parameter oder Eigenschaften, wie beispielsweise Korrosionsstabilität und Optik, nicht mehr erfüllt werden. Beispielsweise werden durch die Nasszerkleinerung eventuelle Pigmentbeschichtungen zerstört und durch die eintretende Reaktion zwischen Metallpigment und Wasser der Charakter, insbesondere die optischen Eigenschaften, des Metalleffektpigmentes nachhaltig negativ verändert. In keiner der möglichen Anwendungen solcher Metalleffektpigmentpräparate kann der gewünschte metallische Effekt mehr erzielt werden, der beim Einsatz der nicht zerkleinerten Ausgangsmetalleffektpigmentpulvern oder -pasten erreichbar gewesen wäre. Die chemische Stabilität von solchen Präparaten, die beschichtete Metalleffektpigmente enthalten, ist in wässrigen Anwendungen durch die zerstörte Beschichtung nicht mehr gegeben.

In der EP 0 964 895 A1 werden Metalleffektpigmentpräparationen genannt, die in erster Linie pastenförmig sind, aber auch zu Trockenpräparaten weiterverarbeitet werden können. Diese Pigmentpräparationen enthalten organische Polymere in allgemeiner Form. Der Pigmentgehalt der in der EP 0 964 895 A1 beschriebenen Pigmentpräparation ist mit nur 40 - 60 Gew.-% nachteiligerweise relativ gering, was für den Anwender des Pigmentpräparates Nachteile mit sich bringt. Durch einen derart geringen Pigmentgehalt im Präparat muß der Anwender in seiner Formulierung einen hohen Anteil an Fremdsubstanzen hinnehmen, die die gewünschten Eigenschaften seiner Beschichtungsformulierung negativ beeinflussen können.

Die DE 199 47 175 A1 beschreibt eine Präparation mit Effektpigmenten, die als Harzkomponente ein styrolmodifiziertes Maleinatharz enthält. Der Grundkörper des Harzes besteht hierbei aus Maleinsäureanhydrid und Styrol. Von styrolhaltigen Bindemitteln ist jedoch bekannt, dass mit steigendem Styrolgehalt die Wetterstabilität einer Beschichtung schlechter wird.

Des Weiteren zeigen trockene Metallpigmentpräparate, die in der DE 199 47 175 A1 beschrieben sind, eine mangelhafte Pelletfestigkeit und zerfallen bei Gebrauch unter erheblicher Staubbildung.

Die EP 1 104 447 A1 beschreibt Pigmentpräparationen mit Polyalkylenglykolen sowie Hydroxylgruppen-reichen Bindemitteln. Die Polyalkylenglykole, zum Beispiel Polyethylenglykol 2000, führen zwar bei den beschriebenen Trockenpräparaten, insbesondere auf Basis von Perlglanzpigmenten zu einer Verbesserung der Festigkeit, beeinträchtigen aber die Lagerstabilität des Trockenpräparates derart, dass insbesondere bei Verwendung von Metalleffektpigmenten schon nach kurzer Zeit Pigmentaggregate entstehen, die im Lack nicht mehr redispergierbar sind. Der Verlust an Deckfähigkeit durch Aggregation ist hoch, die Lagerstabilität ist damit unbefriedigend. Ferner führt Polyethylenglykol in Farben und Lacken nachteiligerweise zu einer geringen Bewitterungsstabilität.

Die Dispergierbarkeit dieser Trockenpräparate in Lacken ist schwierig und bedarf hoher Scherkräfte und ist mithin verfahrenstechnisch aufwendig. Nachteiligerweise kann es bei den erforderlichen hohen Scherkräften zu Beschädigungen der Pigmente, insbesondere der Pigmentoberfläche kommen. Darüber hinaus sind Applikationen dieser Polyalkylenglykol-haltigen Präparate in Lacken weniger brillant, als Lacke die unter Verwendung von entsprechenden Pulver oder Pasten, die frei von Polyalkylenglykol sind, hergestellte werden.

Die europäische Patentschrift EP 1 153 995 offenbart eine Pigmentpräparation mit Effektpigmenten, die als Harzkomponente ein modifiziertes Kolophoniumharz mit bestimmten Eigenschaften hinsichtlich der Säurezahl, des Hydroxylgruppengehaltes und des Erweichungspunktes aufweist. Diese Präparationen zeigen im Fall von Metalleffektpigmenten jedoch keine gute Formbeständigkeit. Die Dispergierung und Deckfähigkeit, d.h. Abdeckung eines Untergrundes pro Gewichtseinheit Pigment, in Wasserlacken ist ebenfalls nicht befriedigend. Des Weiteren ist der Erweichungsbereich der verwendeten Harze von 50 - 120°C in Bezug auf den Herstellungsprozess von kompaktierten Pigmentpräparationen von Nachteil. In diesem niedrigen Temperaturbereich besteht bei der Trocknung des Pigmentpräparates die Gefahr einer Erweichung und Verblockung des Harzes. Mithin ist die Rieselfähigkeit der kompaktierten Pigmentpräparation nicht mehr gegeben. Auch lassen sich Metalleffektpigmente, die unter Erweichung des Harzes "zusammengesintert" sind, nur schwer oder gar nicht in einem Lacksystem dispergieren.

Die im Stand der Technik genannten Schriften ergeben insbesondere bei Metallpigmenten und insbesondere für wässrige Anwendungen keine befriedigenden Lösungen.

Die WO 85/00614 beschreibt die Herstellung von Pellets mit Metallpigmenten. Hier sind nachteiligerweise jedoch keine brauchbaren Anwendungen für wässrige Systeme offenbart.

In der DE 196 16 287 A1 wird die Herstellung von Perlglanzpigmentpräparationen für Druckfarben beschrieben. Jedoch finden sich auch hier keine Lösungsmöglichkeiten für wässrige Coatings mit Metalleffektpigmenten.

Die WO 02/22749 A1 offenbart eine Pigmentpräparation in Granulatform.

Der Erfindung liegt die Aufgabe zu Grunde, eine Metalleffektpigmentpräparation bereitzustellen, die in einer kompaktierten Darreichungsform formuliert werden kann und dadurch eine staubarme, vorzugsweise staubfreie, Dosierbarkeit bei vorzugsweise möglichst minimaler VOC-Belastung ermöglicht. Die Metalleffektpigmente dieser Präparation sollen sich ferner durch eine sehr gute Deckfähigkeit in einem Anwendungsmedium auszeichnen. Die Präparation soll weiterhin eine verbesserte Formbeständigkeit sowie eine hohe Lagerstabilität aufweisen und über die Lagerzeit zu einer möglichst geringen Veränderung der Pigmenteigenschaften und insbesondere zu keiner Bildung von Pigmentaggregaten führen. Die Metalleffektpigmentpräparation soll in wässrigen, aber auch in lösemittelhaltigen Anwendungssystemen leicht dispergierbar sein, wobei die Metalleffektpigmente eine hohe Deckfähigkeit im Anwendungsmedium haben und die optischen Eigenschaften der Metallpigmente bei der Einarbeitung in das Anwendungsmedium nicht beeinträchtigt werden.

Weiterhin soll ein kostengünstiges Verfahren zur Herstellung der erfindungsgemäßen Metalleffektpigmentpräparation gefunden werden.

Die Aufgabe wird gelöst durch Bereitstellung einer Pigmentpräparation mit Metalleffektpigmenten in kompaktierter Form gemäß Anspruch 1.

Die Angaben in Gew.-% beziehen sich dabei jeweils auf das Gesamtgewicht der Pigmentpräparation und ergeben in der Summe jeweils 100 Gew.-%.

Bevorzugte Weiterbildungen der Erfindung sind in den Unteransprüchen 2 bis 9 angegeben.

Die der Erfindung zugrundliegende Aufgabe wird des weiteren durch Bereitstellung eines Verfahrens zur Herstellung der erfindungsgemäßen Pigmentpräparation gelöst, das folgende Schritte umfasst:
a) Vermischen eines Metalleffektpigmentes, welches mindestens eine niedrig brechende Schicht auf dem metallischen Kern des Metalleffektpigmentes aufweist, wobei die niedrig brechende Schicht mindestens eine anorganische Komponente enthält oder daraus besteht, mit wenigstens einem Bindemittel, welches eine Säurezahl von 150 - 500 mg KOH/g Bindemittel und einen Schmelzpunkt oder Schmelzbereich, der im Bereich von 120 - 200 °C liegt,
b) Kompaktieren der in Schritt a) erhaltenen Mischung,
c) optional Trocknen.

Eine bevorzugte Weiterbildung des Verfahrens ist im Unteranspruch 11 angegeben.

Es hat sich überraschend gezeigt, dass kompaktierte Metalleffektpigmentpräparationen bereitgestellt werden können, die einen hohen Gehalt an Metalleffektpigment aufweisen, in der jeweiligen Kompaktierungsform formstabil sind und nach dem Einbringen in ein Applikationsmedium leicht unter Vereinzelung der Metalleffektpigmente zerfallen. Sehr überraschend ist dabei, dass einerseits die Formstabilität der kompaktierten Metalleffektpigment enthaltenden Darreichungsform, die eine verstärkte Haftung der Metalleffektpigmente aneinander in der jeweiligen kompaktierten Darreichungsform erfordert, und andererseits ein leichtes Zerfallen der kompaktierten metalleffektpigmenthaltigen Darreichungsform in einzelne, d.h. nicht aggregierte Metalleffektpigmente, nach Einarbeitung in ein Applikationsmedium miteinander kombiniert werden können.

Die erfindungsgemäße Metalleffektpigmentpräparation, die beispielsweise in Form von Granulat, Pellets, Briketts, Chips, Tabletten, Würstchen, etc. vorliegen kann, läßt sich äußerst einfach handhaben. Bei dieser kompaktierten Darreichungsform besteht nicht die Gefahr einer gesundheitlichen Gefährdung durch Staub, beispielsweise durch Einatmen von Staubpartikeln oder in Form einer Staubexplosion. Ebenfalls besteht auch keine Gefahr, dass es zu einer Einatmung oder Entzündung von flüchtigen organischen Lösungsmitteln kommt.

Des weiteren hat sich gezeigt, dass die Metalleffektpigmente in der kompaktierten Form vor mechanischer Einwirkung, beispielsweise beim Transport oder Umfüllen, besser geschützt sind als bei einem Metalleffektpigmentpulver, bei dem es durch Reibung der Metalleffektpigmente aneinander oder an der Wandung von Gefäßen oder Rohren zu einer Beschädigung von Kanten und Oberflächen der Metalleffektpigmente kommen kann. Derartige Beschädigungen können zu einem späteren Zeitpunkt zur Korrosion bei diesen Metalleffektpigmenten führen und mithin zu einer Vergrauung in einer Farb- oder Lackschicht, was äußerst unerwünscht ist.

Die kompaktierte Darreichungsform stellt mithin für Mensch und Umwelt einen signifikanten Fortschritt dar.

Die Begriffe "Metalleffektpigment" und "Metallpigment" werden vorliegend austauschbar verwendet und bezeichnen plättchenförmige Metallpigmente. Diese plättchenförmigen Metallpigmente weisen einen plättchenförmigen metallischen Kern oder Metallkern auf, der mit einer oder mehreren, vorzugsweise umhüllenden, Beschichtungen versehen sein kann.

Unter einem Metalleffektpigment wird ein plättchenförmiges Metallpigment verstanden. Der mittlere Durchmesser eines plättchenförmigen Metallpigmentes (Metalleffektpigmentes) beträgt üblicherweise 1 bis 200 µm, vorzugsweise 3 bis 100 µm, weiter bevorzugt 5 bis 80 µm. Die Dicke der Metalleffektpigmente (ohne zusätzliche Beschichtung) liegt dabei üblicherweise in einem Bereich von 20 nm bis 2 µm, wobei das Verhältnis von Durchmesser zu Dicke üblicherweise in einem Bereich von 2000 :1 bis 10 : 1, vorzugsweise von 1500 : 1 bis 50 : 1, weiter bevorzugt von 1000: 1 bis 100 : 1, noch weiter bevorzugt von 500 : 1 bis 200 : 1, liegt. Dieses Verhältnis wird auch als Formfaktor bezeichnet.

Unter einer "niedrig brechenden Schicht" wird im Sinne der Erfindung eine Schicht oder Beschichtung aus Substanzen mit einem niedrigen Brechungsindex verstanden. Ein niedriger Brechungsindex im Sinne der Erfindung ist ein Brechungsindex kleiner als 2,2, vorzugsweise kleiner als 2,0, weiter vorzugsweise kleiner als 1,8, vorzugsweise kleiner als 1,7. Bei einer bevorzugten Ausführungsform der Erfindung liegt der niedrige Brechungsindex in einem Bereich von 1,4 bis 1,65, vorzugsweise von 1,45 bis 1,6.

Vorzugsweise handelt es sich bei einer niedrigbrechenden Schicht um eine Schicht oder Beschichtung mit, vorzugsweise aus, einem oder mehreren Metalloxiden und/oder Metalloxidhydraten mit den angegebenen niedrigen Brechungsindices. Vorzugsweise werden Siliziumoxid, vorzugsweise SiO₂, und/oder Aluminiumoxid, vorzugsweise Al₂O₃, und/oder deren Hydrate verwendet.

Die erfindungsgemäße Pigmentpräparation ist ein staubarmes, vorzugsweise staubfreies, rieselfähiges Produkt, das mit vielen kommerziell erhältlichen Bindemittelsystemen sowohl auf Wasserbasis als auch auf Basis von organischen Lösungsmitteln zu hoch deckfähigen, metalleffektpigmentierten Lacken, Farben und Druckfarben für verschiedenste Anwendungen verarbeitet werden kann. Die Pigmentpräparation kann dabei ohne vorherige Anschlämmung direkt in das Applikationsmedium, beispielsweise Lack, Farbe oder Druckfarbe, eindispergiert werden. Äußerst vorteilhaft zerfällt die kompaktierte Darreichungsform unter Freisetzung der Metalleffektpigmente. Die Metalleffektpigmente liegen nach der Einarbeitung mithin im Wesentlichen in nicht agglomerierter, vorzugsweise in nicht agglomerierter Form, in dem Applikationsmedium vor.

Die erfindungsgemäße Pigmentpräparation enthält Metalleffektpigmente.
Als Metalleffektpigmente werden plättchenförmige Metallpigmente vorzugsweise auf Basis von Aluminium, Zink, Magnesium, Eisen, Edelstahl, Kupfer, Messing, Silber oder Gold eingesetzt.

Besonders bevorzugt sind hierbei Aluminium-, Messing und/oder Eiseneffektpigmente und ganz besonders bevorzugt Aluminiumeffektpigmente.

Die Metalleffektpigmente können vom Cornflake- oder Silberdollartyp sein, welche durch Verformungsvermahlung erhaltene Metalleffektpigmente sind. Bei einer Verformungsvermahlung werden, vorzugsweise sphärische, Metallpartikeln in Gegenwart von Mahlkörpern, vorzugsweise sphärischen Mahlkörpern wie beispielsweise Stahlkugeln oder Keramikkugeln, beispielsweise in einer Kugelmühle, vorzugsweise in Gegenwart von Schmiermitteln wie Stearin- oder Ölsäure vermahlen und mithin zu Plättchen verformt. Sie umfassen Größen, die vorzugsweise durch einen d₅₀-Wert aus einem Bereich von 2 bis 100 µm, bevorzugt von 5 bis 50 µm und besonders bevorzugt von 7 bis 35 µm charakterisiert sind. Der d₅₀-Wert ist dabei der Wert der Volumen-gemittelten Summenhäufigkeitsverteilung der Größenverteilung, wie sie mittels Laserbeugungsmethoden ermittelt wird. Der d₅₀-Wert gibt dabei an, dass 50 % der Teilchen den angegebenen Durchmesser, beispielsweise 100 µm, haben oder kleiner sind. Die Summenhäufigkeitsverteilung wird auch als Summendurchgangsverteilung bezeichnet.

Die mittlere Dicke der Metalleffektpigmente ohne Beschichtung liegt bei 50 bis ca. 2000 nm, bevorzugt bei 60 bis 1.000 nm und besonders bevorzugt bei 200 bis 600 nm.

Im Fall von Aluminiumeffektpigmenten sind weiterhin bevorzugt neue Ausführungsformen aus sehr dünnen Pigmenten, die durch Vermahlung, insbesondere durch Nassvermahlung hergestellt werden, wie sie in der DE 103 15 775 A1 oder der DE 10 2007 062942 beschrieben werden, deren Inhalt hiermit durch Bezugnahme aufgenommen ist. Dies sind bevorzugt Aluminiumeffektpigmente mit einer mittleren Dicke aus einem Bereich von 20 bis 100 nm und bevorzugt von 40 bis 80 nm.

Bei Eiseneffektpigmenten sind besonders jene bevorzugt, die aus Carbonyleisenpulver hergestellt sind. Die Herstellung dieser Eiseneffektpigmente ist in EP 1 251 152 B1 und EP 1 251 153 B1 beschrieben, deren Inhalt unter Bezugnahme hiermit aufgenommen wird. Das Carbonyleisenpulver wird vorzugsweise durch Zersetzung von dampfförmigem Eisenpentacarbonyl Fe(CO)₅ in Hohlraumzersetzern (vgl. Prospekte der BASF AG, Ludwigshafen, Deutschland, RCA 3210, 0686-2.0, Abb. 1) hergestellt und kann beispielsweise von der BASF AG bezogen werden. Das Carbonyleisenpulver enthält bis zu 1,5 Gew.-% Kohlenstoff, etwa 1 Gew.-% Sauerstoff und bis zu 1 Gew.-% Stickstoff, wobei sich die Angaben in Gew.-% auf das Gesamtgewicht des Carbonyleisenpulvers beziehen. Das Carbonyleisenpulver wird vorzugsweise in einem Wasserstoffstrom reduzierend behandelt, wodurch reduziertes Carbonyleisenpulver erhalten wird, das einen Eisengehalt von mehr als 99,5 Gew.-% aufweist und einer Verformungsvermahlung unterzogen werden kann. Das verwendete reduzierte Carbonyleisenpulver weist vorzugsweise eine mittlere Partikelgröße in einem Bereich von 0,5 bis 15 µm, vorzugsweise von 1 bis 10 µm, auf.

Zur Herstellung von flüssigen metalleffektpigmentierten Lacken und Farben, die Wasser enthalten, ist aufgrund der chemischen Wechselwirkung von Wasser und Metallpigment i.d.R. die Verwendung von passivierten, d.h. gegenüber Korrosion stabilisierten Metalleffektpigmenten nötig. Die Verwendung unbeschichteter Metalleffektpigmente, z.B. Aluminiumplättchen, wie sie in lösemittelhaltigen Lacken und Farben eingesetzt werden, würde zu einem chemischen Angriff auf die Pigmentoberfläche und damit zu einer negativen Veränderung des gewünschten metallischen Effektes führen. Die Bildung von Wasserstoffgas bei diesem chemischen Angriff führt ferner zu erheblichen Gefahren.

Im Hinblick auf die Nachteile.der Verarbeitung von Metalleffektpigmentpasten und Metalleffektpigmentpulvern und den Bedarf an passivierten Metalleffektpigmenten insbesondere für wässrige Lackanwendungen und Beschichtungssysteme enthält die erfindungsgemäße Pigmentpräparation 60 - 95 Gew.-% mindestens eines Metalleffektpigmentes, welches mindestens eine niedrig brechende Schicht, welche mindestens eine anorganische Komponente enthält oder daraus besteht, aufweist.

Die niedrig brechende Schicht weist einen Brechungsindex < 2,2 und bevorzugt < 2,0 auf.

Bei der anorganischen Komponente der niedrig brechenden Schicht handelt es sich vorzugsweise um Metalloxid, Metallhydroxid, Metalloxidhydrat, Metallsulfid, Metallselenid, Metallnitrid, Metallphosphat oder Kombinationen oder Mischungen davon.

Bevorzugt ist bei einer Ausführungsform der Erfindung, dass die mindestens eine niedrig brechende anorganische Komponente der niedrig brechenden Schicht eine Metalloxid-, Metallhydroxid- und/oder eine Metalloxidhydratschicht ist.

Weiterhin ist bevorzugt, dass die Schicht aus einem niedrig brechenden Metalloxid-, Metallhydroxid- und/oder eine Metalloxidhydrat besteht.

Bei einer weiteren bevorzugten Ausführungsform der Erfindung besteht oder umfasst die niedrig brechende Schicht anorganisch/organische, d.h. hybride Mischschichten. Metalleffektpigmente, die mit derartigen anorganisch/organischen Mischschichten beschichtet sind, sind in der EP 1812519 A2 offenbart, die hiermit unter Bezugnahme aufgenommen ist.

Bei einer weiter bevorzugten Ausführungsform ist die anorganische Komponente der niedrig brechenden Schicht oder die niedrig brechende Schicht selbst eine anorganische Metalloxid-, Metallhydroxid- und/oder Metalloxidhydratschicht, die vorzugsweise aus der Gruppe, die aus Oxiden, Hydroxiden oder Oxidhydraten der Elemente Silicium, Aluminium, Chrom, Chrom-Metall-Legierungen, Vanadium, Molybdän, und deren Mischungen und deren Kombinationen, ausgewählt ist.

Bei einer weiter bevorzugten Ausführungsform wird die anorganische Metalloxid-, Metallhydroxid- und/oder Metalloxidhydratschicht aus der Gruppe, die aus Oxiden, Hydroxiden oder Oxidhydraten der Elemente Silicium, Aluminium, Chrom, Chrom-Metall-Legierungen, Molybdän und Mischungen und Kombinationen davon besteht, ausgewählt und weist eine Schichtdicke von 5 bis 90 nm auf.

Ganz besonders bevorzugt sind dabei die mit Siliciumoxiden und/oder Siliciumoxidhydraten oder durch Chromatierungsprozesse erhaltenen Chromoxide oder Chrom-Metall-Mischoxidschichten beschichteten Metallpigmente. Bei den Chrom-Metall-Mischoxiden handelt es sich bei dem Metall vorzugsweise um das Metall des zu beschichtenden Metallplättchens, beispielsweise Aluminium, Eisen oder Edelstahl. Derartig beschichtete Metalleffektpigmente haben sich als die stabilsten Metallpigmente für wässrige Anwendungen erwiesen.

Zudem können die erfindungsgemäßen Pigmentpräparationen auch in lösemittelbasierenden Lacken, Farben und Druckfarben verwendet werden.

Beispiele für mit Siliciumoxiden beschichtete Metalleffektpigmente sind die unter den Marken PCR, Hydrolan^{®} (Fa. ECKART, Aluminiumpigmente), RESIST^{™} und DOROLAN^{®} (Goldbronzepigmente, Fa. Eckart) vertriebenen Produkte. Durch einen Chromatierungsprozess entstehen Schutzschichten aus Chrom-Aluminium-Mischoxiden (EP 0 259 592 B1); entsprechende Produkte werden unter der Marke STAPA Hydrolux^{®} vertrieben. Unter der Marke STAPA Atoxal^{®} sind Aluminiumpigmente mit Schichten aus Aluminiumoxid bzw. Aluminiumoxidhydrat (EP 0 848 735 B1) auf dem Markt. Hier hat die Oxidschicht neben der Schutzfunktion auch farbgebende Eigenschaften. Alle diese Pigmente werden von der Fa. ECKART GmbH, Fürth vertrieben.

Aluminiumeffektpigmente mit einer Metalloxidschicht mit Vanadaten sind beispielsweise in der EP 0 616 946 und mit Molybdaten beispielsweise in den EP 0 583 919 B1, EP 0 962 505 oder EP 1 619 222 A1 beschrieben, deren Inhalt jeweils unter Bezugnahme aufgenommen ist.

Des Weiteren sind erfindungsgemäß auch Kombinationen einer oder mehrer Oxidschichten möglich. So beschreibt beispielsweise die EP 1 619 222 A1 eine Kombination von Molybdat und SiO₂-Schutzschichten und in der EP 1 685 198 A2 sind Pigmente mit einer Aluminiumoxidschicht, einer hochbrechenden Metallchalkogenidschicht und dazwischen einer Mischschicht aus diesen Schichten beschrieben. Die vorgenannten Metalleffektpigmente können ebenfalls bei der erfindungsgemäßen Pigmentpräparation verwendet werden.

Kommerziell erhältliche passivierte Metalleffektpigmente werden im Wasserlackbereich (Industrielacke, Automobillacke) eingesetzt. Üblich sind vor allem Aluminiumeffektpigmente, die mit Schichten aus SiO₂, Chromatierungsschichten, Aluminiumoxidschichten oder Molybdänoxidschichten beschichtet sind. Derartige Aluminiumeffektpigmente werden kommerziell derzeit nicht in wässrigen Druckfarben eingesetzt, da sie entweder zu groß sind und/oder ein nicht ausreichendes Transferverhalten beim Verdrucken aufweisen. Die Schichtdicken dieser Passivschichten liegen bevorzugt im Bereich von 5 bis 90 nm, bevorzugt von 6 bis 35 nm. Im Fall von SiO₂-Schichte liegen die Schichtdicken bevorzugt bei 6 bis 40 nm und besonders bevorzugt bei 8 bis 35 nm.

Diese passivierten Aluminiumeffektpigmente werden in Form von Pasten in den Handel gebracht. Der Pigmentanteil beträgt hier üblicherweise 65 Gew.-%. Sie werden in den unterschiedlichsten Lösemitteln angeboten. Sehr häufig wird Isopropanol verwendet, wie beispielsweise die Produkte Stapa IL Hydrolan oder Stapa Aloxal 3010 von der Firma Eckart. Nicht immer ist jedoch dieses Lösemittel optimal mit Wasserlacken verträglich. Außerdem sind herstellungsbedingt noch bis zu ca. 6 Gew.-% Aliphaten oder Aromaten wie Testbenzin oder Solvent Naphtha in den vorgenannten Pasten vorhanden. Dieser relativ hohe Anteil sehr unpolarer und/oder hydrophober Lösemittel vermindert die Kompatibilität der Pigmente mit dem Wasserlack. Die Folge sind Aluminiumeffektpigmentagglomerate, die die Deckfähigkeit mindern.

Zwar können die Aluminiumeffektpigmente durch einen sogenannten Umnetzvorgang von diesen Lösemitteln befreit und anschließend in einem beliebigen anderen Lösemittel angepastet werden. Bei diesem Vorgang wird zunächst den Pigmenten unter Vakuum und bei höheren Temperaturen das Lösemittel entzogen, bis ein Metallpulver vorliegt. Hierbei werden die Pigmente mit Hilfe von beispielsweise einer Mischwendel stark bewegt. Mit dem zunehmenden Entzug von Lösemittel steigt jedoch die Viskosität der Metallpaste stark an. Dies führt zu hohen Scherenergien und hierdurch können die Passivierungs- bzw. Korrosionsschutzschichten geschädigt werden. Die Pigmente können eine Einbuße oder sogar einen Verlust ihrer gasungsstabilen Eigenschaften erleiden und können somit nicht oder nur mit erheblichen Qualitätseinbußen im Wasserlack verwendet werden.

Zudem weisen alle lösemittelbasierenden Pasten einen gewissen VOC-Gehalt auf, was beim Einsatz im Wasserlack aus ökologischen Gründen zunehmend unerwünscht ist.

Mit den erfindungsgemäßen Pigmentpräparationen können diese Probleme überraschenderweise gelöst werden.

Die erfindungsgemäßen Pigmentpräparationen enthalten 60 - 95 Gew.-% an Metalleffektpigmenten, vorzugsweise 65 bis 92 Gew.-%, weiter bevorzugt 70 - 90 Gew.-% und ganz besonders bevorzugt 80 - 90 Gew.-%, jeweils bezogen auf das Gesamtgewicht der Pigmentpräparation. Unterhalb eines Gehaltes von 60 Gew.-% ist die Konzentration für den Anwender zu niedrig. Oberhalb von 95 Gew.-% ist die Konzentration der Metalleffektpigmente zu hoch, um den festen Zusammenhalt der Pigmentpräparation in kompaktierter Form zu gewährleisten.

Als Bindemittel, welches in der erfindungsgemäßen Pigmentpräparation enthalten ist, werden Styrolgruppen-freie Bindemittelmittel mit einer Säurezahl von 150 - 500 mg KOH/g Bindemittel und vorzugsweise einem Hydroxylgruppengehalt von 0 - 35 mg KOH/g Bindemittel verwendet. Entsprechende Bindemittel oder Harze sind u.a. in Karsten, Lackrohstofftabellen, 10. Auflage 2000 beschrieben.

Bindemittel mit einer Säurezahl unter 150 mg KOH/g Harz haben sich insbesondere für wässrige Anwendungen als wenig geeignet erwiesen. Bevorzugt beträgt die Säurezahl 180 - 500 mg KOH/g Bindemittel und besonders bevorzugt über 200 - 400 mg KOH/g Bindemittel.

Die Bestimmung der Säurezahl erfolgt in Anlehnung an die DIN EN ISO 2114 (früher DIN 53402).

Bei dem Bindemittel handelt es sich vorzugsweise um ein Harz.

Weiterhin weisen die Bindemittel oder Harze der erfindungsgemäßen Pigmentpräparation einen Schmelzpunkt oder ein Schmelzintervall aus einem Bereich von 120° C - 200 °C, bevorzugt von 130 °C - 190 °C und besonders bevorzugt von 140 °C - 180 °C, auf. Der hohe Schmelzpunkt oder Schmelzpunktbereich ist besonders wichtig, um eine Verblockung des Metalleffektpigmentpräparates beispielsweise während des Trocknungsprozesses oder später im Liefergebinde zu vermeiden.

Im Liefergebinde können die Pigmentpräparate unter Umständen einige Wochen bis Monate erhöhten Temperaturen (und Drücken) ausgesetzt sein, bevor sie der bestimmungsgemäßen Anwendung, beispielsweise in Lacken, Farben oder Druckfarben, zugeführt werden.

Die Bestimmung des Schmelzpunktes bzw. des Schmelzintervalls erfolgt gemäß DIN 53181 (Kapillarmethode).

Bei lösemittelbasierenden Anwendungen sollte das Harz bevorzugt nicht in einer neutralisierten Form eingesetzt werden.

Für den Bereich der wasserbasierenden Anwendungen ist es jedoch notwendig, das Harz mit geeigneten, in wässrigen Lacken und Farben gebräuchlichen Neutralisationsmitteln bzw. deren Gemischen teilweise oder voll zu neutralisieren, um eine Wasserlöslichkeit herbeizuführen. Als Neutralisationsmittel kommen Alkalihydroxyde, wie z.B. NaOH oder KOH, Ammoniak, Harnstoff und dessen Derivate, Amine und Alkanolamine in Betracht.

Bevorzugt werden Neutralisationsmittel eingesetzt, die unter den Trocknungsbedingungen der Pigmentpräparation, wenigstens aber bis 100°C nichtflüchtig oder schwerflüchtig sind.

Die erfindungsgemäße Metallpigmentpräparation, insbesondere wässrige erfindungsgemäße Metallpigmentpräparationen, kann mithin Neutralisationsmittel in einem Anteil von 0,5 - 11 Gew.-%, bevorzugt 1 - 9 Gew.-% und besonders bevorzugt 2 - 8 Gew.-%, jeweils bezogen auf das Gesamtgewicht der Pigmentpräparation, enthalten.

Bei einer bevorzugten Ausführungsform weisen die Bindemittel, vorzugsweise Harze, der erfindungsgemäßen Pigmentpräparationen einen Hydroxylgruppengehalt von 0 - 35 mg KOH/g Bindemittel, bevorzugt von 3 - 35 mg KOH/g Bindemittel und besonders bevorzugt von 5 - 30 mg KOH/g Bindemittel auf.
Die Bestimmung der Hydroxylzahl erfolgt hierbei gemäß EN ISO 4629.

Oberhalb eines Hydroxylgruppengehalts von 35 mg KOH/g Bindemittel weisen die Bindemittel, vorzugsweise Harze, eine zu geringe Dispergierbarkeit auf, was zu einer stark verringerten Deckfähigkeit der erfindungsgemäßen Metalleffektpigmentpräparation, insbesondere in wasserbasierenden Anwendungssystemen, führt.

Die Konzentration des Styrolgruppen-freien Bindemittels, vorzugsweise Harz, in der erfindungsgemäßen Pigmentpräparation beträgt 0,5 - 40 Gew.-%, bevorzugt zu 1 - 30 Gew.-% und ganz besonders bevorzugt zu 5 - 20 Gew.-%, jeweils bezogen auf das Gesamtgewicht der Pigmentpräparation.

Unterhalb von 0,5 Gew.-% ist das styrolgruppenfreie Bindemittel, vorzugsweise Harz, nicht ausreichend wirksam, so dass insbesondere die Formbeständigkeit der der kompaktierten Pigmentpräparation nicht gegeben ist.

Oberhalb eines Anteils von 40 Gew.-% kann es zu Unverträglichkeiten mit dem Applikationssystem kommen. Ferner ist hier der Anteil des Metalleffektpigmentes an der Pigmentpräparation zu gering, da sich die erfindungsgemäße Metalleffektpigmentpräparation unter anderem durch den hohen Metalleffektpigmentgehalt auszeichnet.

Als styrolgruppen-freies Bindemittel können selbstverständlich auch Gemische verschiedener styrolgruppen-freier Bindemittel verwendet werden.

Es wurde überraschend festgestellt, dass als styrolgruppen-freie Bindemittel insbesondere Harze aus der Gruppe der modifizierten bzw. funktionalisierten Maleinatharze besonders geeignet sind.

Maleinatharze werden aus Maleinsäure-Anhydrid und Kolophoniumharz synthetisiert, anschließend verestert und modifiziert bzw. funktionalisiert, um eine optimale, breite Verträglichkeit mit den üblicherweise in Lacken, Farben und Druckfarben verwendeten Bindemittelkomponenten zu erzielen. Besitzen diese Harze eine genügend hohe Säurezahl, wie in Anspruch 1 angegeben, so können sie durch Neutralisation wasserlöslich eingestellt werden. Geeignete Neutralisationsmittel sind die in der Lackindustrie üblichen Amine, organische Amine, Alkanolamine, Ammoniak und Alkalilaugen sowie Harnstoff und seine Derivate.

Die modifizierten Maleinatharze sind gemäß der Erfindung styrolgruppen-freie Maleinatharze.

Besonders gute Ergebnisse hinsichtlich des Benetzungsverhaltens und der Verträglichkeit wurden mit durch Carboxylgruppen modifizierten Maleinatharzen erzielt. Überraschenderweise wurde gefunden, dass insbesondere mit Carboxylgruppen-modifizierten Harzen Trockenpräparate aus der erfindungsgemäßen Pigmentpräparation hergestellt werden können, die direkt in einen fertigen Lackansatz oder Farbansatz ohne Vordispergierung eingearbeitet werden können.

Bindemittel zur Herstellung der vorliegenden Erfindung sind im Markt bekannt und werden beispielsweise von der Fa. Kraemer unter der Marke Erkamar^{®}, z.B. Erkamar^{®} 3260, Erkamar^{®} 3265, Erkamar^{®} 3270, Erkamar^{®} 3280, Erkamar^{®} 3285, Erkamar^{®} 3300, Erkamar^{®} 3360 und Erkamar^{®} VP 4760, von der Fa. Hexion unter den Marken Prince™ und Setaprint™, z.B. Prince™ 1614, Prince™ 1626, Prince™ 6200, Prince™ 6500, Prince™ 8200 und Setaprint™M-1400, und von der Fa. Worlée-Chemie GmbH unter der Bezeichnung WorléeSin, z.B. WorléeSin MS 235, WorléeSin MS 265 und WorléeSin MS 270, angeboten.

Die anwendungstechnischen Eigenschaften der erfindungsgemäßen Pigmentpräparation lassen sich je nach Anwendungsbereich weiter verbessern durch die Einarbeitung mindestens eines Additivs in das Präparat. Additive sind nach DIN 55945 A1 Substanzen, die einem Beschichtungsstoff in geringen Mengen zugesetzt werden, um diesem oder einer daraus hergestellten Beschichtung spezifische Eigenschaften zu verleihen. In der Praxis hat es sich als günstig erwiesen, bereits den Metalleffektpigmenten Additive zuzusetzen.

Das wenigstens eine Additiv wird dabei vorzugsweise aus der Gruppe, die aus Netz- und Dispergiermittel, Oberflächenadditive, Rheologieadditive, Entschäumer, Antiabsetzmittel, Korrosionsschutzinhibitoren und Mischungen davon besteht, ausgewählt. Das oder die Additive können die Pigmentbenetzung, die Dispergierbarkeit, die Ausprägung des optischen Effektes und/oder die Lack- bzw. Farbrheologie beeinflussen. Darüber hinaus können Additive auch korrosionsstabilisierende Wirkung insbesondere bei Metalleffektpigmenten aufweisen.

In der erfindungsgemäßen Pigmentpräparation kann das wenigstens eine Additiv in einer Menge von 0 - 25 Gew.-%, bevorzugt 0 - 15 Gew.-% und besonders bevorzugt 0 - 10 Gew.-%, wobei sich die Angabe in Gew.-% auf das Gesamtgewicht der Pigmentpräparation bezieht, enthalten sein. Vorzugsweise umfasst die erfindungsgemäße Pigmentpräparation mindestens ein Additiv mit korrosionsstabilisierender Wirkung gegenüber dem Effektpigment und/oder mit oberflächenaktiven, die Benetzung und Dispergierung bzw. die Rheologie der Pigmentpräparation beeinflussenden Eigenschaften. Es handelt sich hierbei um Additive, wie sie üblicherweise in Farben und Lacken eingesetzt werden (Karsten, Lackrohstofftabellen, 10. Auflage 2000). Weitere bei der erfindungsgemäßen Pigmentpräparation verwendbare Additive sind beispielsweise folgende:
- Antiabsetzmittel werden z.B. von der Fa. Tego Chemie Service GmbH unter der Bezeichnung Tego Dispers oder von der Fa. Vianova Resins GmbH & Co. KG unter der Bezeichnung Additol angeboten.
- Korrosionsinhibitoren werden z.B. von der Fa. Ciba Spezialitätenchemie Lampertheim GmbH unter der Bezeichnung Irgacor oder von der Chemischen Fabrik Budenheim unter der Bezeichnung Budit angeboten.
- Entschäumer und Entlüfter werden z.B. von der Fa. Byk-Chemie unter der Bezeichnung Byk oder von der Fa. Efka Additives BV unter der Bezeichnung Efka angeboten
- Antiausschwimmittel werden z.B. von der Fa. Byk-Chemie unter den Bezeichnungen Anti-Terra, Byk, Disperbyk und Lactimon oder von der Fa. Cognis Deutschland GmbH unter der Bezeichnung Hydropalat oder von der Fa. Efka Additives BV unter der Bezeichnung Efka oder der Fa. Vianova Resins GmbH & Co. KG unter der Bezeichnung Additol angeboten.
- Glanzverbesserungsmittel werden z.B. von der Fa. Efka Additives BV unter der Bezeichnung Efka oder der Fa. Vianova Resins GmbH & Co. KG unter der Bezeichnung Additol angeboten.
- Mattierungsmittel werden z.B. von der Fa. Lubrizol Coating Additives GmbH unter der Bezeichnung Lanco oder der Fa. Chem. Fabrik L.P. Bader & Co. GmbH unter der Bezeichnung Luba-Print angeboten.
- Netz und Dispergieradditive werden z.B. von der Fa. Byk-Chemie unter den Bezeichnungen Anti-Terra, Byk, Disperbyk und Lactimon oder von der Fa. Cognis Deutschland GmbH unter der Bezeichnung Hydropalat, Disponil und Texaphor oder der Fa. Efka Additives BV unter der Bezeichnung Efka oder der Fa. Vianova Resins GmbH & Co. KG unter der Bezeichnung Additol oder der Fa Tego Chemie Service GmbH unter der Bezeichnung Tego Dispers angeboten.
- Rheologieadditive werden z.B. von der Fa. Borchers GmbH unter der Bezeichnung Borchigel oder von der Fa. Byk-Chemie unter der Bezeichnung Byk oder von der Fa. Ciba Spezialitätenchemie Lampertheim GmbH unter der Bezeichnung Viscalex und Rheovis angeboten
- Verlaufsadditive werden z.B. von der Fa. Byk-Chemie unter der Bezeichnung Byk oder Byketol oder der Fa. Efka Additives BV unter der Bezeichnung Efka oder der Fa. Vianova Resins GmbH & Co. KG unter der Bezeichnung Additol angeboten.

Es hat sich überraschenderweise gezeigt, dass es vorteilhaft ist, in die erfindungsgemäße Pigmentpräparation kein Polyethylenglycol einzuarbeiten. Hierdurch lassen sich Beeinträchtigungen in der Lagerstabilität der trockenen Pigmentpräparation sowie Probleme bei der Bewitterungsstabilität von Beschichtungen vermeiden, die die Präparation enthalten. Gemäß einer bevorzugten Weiterbildung der Erfindung enthält die erfindungsgemäße Pigmentpräparation keine Polyalkylenglykole, insbesondere kein Polyethylenglykol.

Weiterhin können neben den beschichteten Metallpigmenten auch konventionelle Farbpigmente und/oder Farbstoffe in den erfindungsgemäßen Metalleffektpigmentpräparationen enthalten sein.

Als konventionelle Farbpigmente werden vorzugsweise Farbpigmente mit einer mittleren Teilchengröße aus dem Bereich von 0,05 bis 5 µm, vorzugsweise 1 bis 3 µm, verwendet. Die verwendbaren Farbpigmente umfassen sowohl anorganische als auch organische Pigmente.

Als anorganische Farbpigmente können Bunt-, Schwarz- und Weißpigmente eingesetzt werden. Typische organische Pigmente sind Bunt- und Schwarzpigmente.

Geeignete organische Pigmente sind z.B.:

| | |
|---|---|
| - Monoazopigmente: | C.I. Pigment Brown 25; |
| | C.I. Pigment Orange 5, 13, 36, 38, 64 und 67; |
| | C.I. Pigment Red 1, 2, 3, 4, 5, 8, 9, 12, 17, 22, 2,3, 31, 48:1, 48:2, 48:3, 48:4, 49, 49:1, 51:1 , 52:1, 52:2, 53, 53:1, 53:3, 57:1, 58:2, 58:4, 63, 112, 146, 148, 170, 175, 184, 185, 187, 191 :1 , 208, 210, 245, 247 und 251; |
| | C.I. Pigment Yellow 1, 3, 62, 65, 73, 74, 97, 120, 151, 154, 168, 181, 183 und 191; |
| | C.I. Pigment Violet 32; |
| - Disazopigmente: | C.I. Pigment Orange 16, 34, 44 und 72; |
| | C.I. Pigment Yellow 12, 13, 14, 16, 17, 81, 83, 106, 113, 126, 127, 155, 174, 176, 180 und 188; |
| - Disazokondensationspigmente: | C.I. Pigment Yellow 93, 95 und 128; |
| | C.I. Pigment Red 144, 166, 214, 220, 221, 242 und 262; |
| ○ | C.I. Pigment Brown 23 und 41; |
| - Anthanthronpigmente: | C.I. Pigment Red 168; |
| - Anthrachinonpigmente: | C.I. Pigment Yellow 147, 177 und 199; |
| | C.I. Pigment Violet 31; |
| - Anthrapyrimidinpigmente: | C.I. Pigment Yellow 108; |
| - Chinacridonpigmente: | C.I. Pigment Orange 48 und 49; |
| | C.I. Pigment Red 122, 202, 206 und 209; |
| | C.I. Pigment Violet 19; |
| - Chinophthalonpigmente: | C.I. Pigment Yellow 138; |
| - Diketopyrrolopyrrolpigmente: | C.I. Pigment Orange 71, 73 und 81; |
| | C.I. Pigment Red 254, 255, 264, 270 und 272; |
| - Dioxazinpigmente: | C.I. Pigment Violet 23 und 37; C Pigment Blue 80; |
| - Flavanthronpigmente: | C.I. Pigment Yellow 24; |
| - Indanthronpigmente: | C.I Pigment Blue 60 und 64; |
| - Isoindolinpigmente: | C.I. Pigment Orange 6 1 und 69; |
| | C.I. Pigment Red 260; C. I. Pigment Yellow 139 und 185; |
| - Isoindolinonpigmente: | C.I. Pigment Yellow 109, 110 und 173; |
| - Isoviolanthronpigmente: | C.I. Pigment Violet 31; |
| - Metallkomplexpigmente: | C.I. Pigment Red 257; C.I. Pigment Yellow 117, 129, 150, 153 und 177; |
| | C.I. Pigment Green 8; |
| - Perinonpigmente: | C.I. Pigment Orange 43; |
| | C.I. Pigment Red 194; |
| - Perylenpigmente: | C.I. Pigment Black 31 und 32; |
| | C.I. Pigment Red 123, 149, 178, 179, 190 und 224; |
| | C.I. Pigment Violet 29; |
| - Phthalocyaninpigmente: | C.I. Pigment Blue 15, 15:1, 15:2, 15:3, 15:4, 15:6 und 16; |
| | C.I. Pigment Green 7 und 36; |
| - Pyranthronpigmente: | C.I. Pigment Orange 51; |
| | C.I. Pigment Red 216; |
| - Pyrazolochinazolonpigmente: | C.I. Pigment Orange 67; |
| | C.I. Pigment Red 251; |
| - Thioindigopigmente: | C.I. Pigment Red 88 und 181; |
| | C.I. Pigment Violet 38; |
| - Triarylcarboniumpigmente: | C.I. Pigment Blue 1, 61 und 62; C. |
| | C.I. Pigment Green 1; |
| | C.I. Pigment Red 81, 81:1 und 169; |
| | C.I. Pigment Violet 1, 2, 3 und 27; |
| - C.I. Pigment Black 1 (Anilinschwarz); | |
| - C.I. Pigment Yellow 101 (Aldazingelb); | |
| - C.I. Pigment Brown 22. | |

### Beispiele für geeignete anorganische Pigmente sind:

| | |
|---|---|
| - Weißpigmente: | Titandioxid (C.I. Pigment White 6), Zinkweiß, |
| | Farbenzinkoxid; Zinksulfid, Lithopone; |
| - Schwarzpigmente: | Eisenoxidschwarz (C.I. Pigment Black 11), Eisen-Mangan-Schwarz, Spinellschwarz (C.I. Pigment Black 27); Ruß (C.I. Pigment Black 7); |
| - Buntpigmente: | Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau; Ultramarinviolett; Kobalt- und Manganviolett; Eisenoxidrot (C.I. Pigment Red 101); Cadmiumsulfoselenid (C.I. Pigment Red 108); Cersulfid (C.I. Pigment Red 265); Molybdat- rot (C.I. Pigment Red 104); Ultramarinrot; Eisenoxidbraun (C.I. Pigment Brown 6 und 7), Mischbraun, Spinell- und Korundphasen (C.I. Pigment Brown 29, 3 1, 33, 34, 35, 37, 39 und 40), Chromtitangelb (C.I. Pigment Brown 24), Chromorange; Cersulfid (C.I. Pigment Orange 75); Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzink- sulfid (C.I. Pigment Yellow 37 und 35); Chromgelb (C.I. Pigment Yellow 34); Bismutvanadat (C.I. Pigment Yellow 184). |

Weiterhin können die erfindungsgemäßen Pigmentpräparationen neben den beschichteten Metalleffektpigmenten auch andere Effektpigmente wie beispielsweise Perlglanzpigmente enthalten. Durch die Verwendung von mindestens zwei verschiedenen Effektpigmenttypen lassen sich besondere Applikationsergebnisse hinsichtlich Farb-, Glanz- und Helligkeitseffekten erzielen.

Bevorzugt enthalten die erfindungsgemäßen Pigmentpräparationen jedoch die Metalleffektpigmente in reiner Form.

Die erfindungsgemäße Metallpigmentpräparation wird vorzugsweise in Form von Granulaten, Pellets, Briketts, Chips oder Tabletten bereitgestellt.

Bei der jeweiligen Darreichungsform hat der Restfeuchtegehalt einen Wert von 0 bis 15 Gew.-%, vorzugsweise von 0,05 bis 10 Gew.-%, weiter bevorzugt von 1 bis 5 Gew.-%, an Wasser und/oder organischem Lösemittel bzw. Lösemittelgemisch, jeweils bezogen auf das Gesamtgewicht der Metalleffektpigmentpräparation. Insbesondere bei Granulaten, die keine kompakte, regelmäßige Form aufweisen, kann der Restfeuchtegehalt im höheren Bereich liegen, beispielsweise bei 5 bis 15 Gew.-% und bevorzugt bei 6 bis 10 Gew.-%, jeweils bezogen auf das Gesamtgewichts des Gramulats.

Bei den regelmäßig geformten Angebotsformen Pellets, Briketts, Chips oder Tabletten sind niedrigere Restfeuchtegehalte von 0 bis 10 Gew.-% bevorzugt, weiter bevorzugt von 0,05 bis 3 Gew.-% und besonders bevorzugt von 0,1 bis 1 Gew.-%, jeweils bezogen auf das Gesamtgewicht der Pigmentpräparation.

Insbesondere bei wässrigen Anwendungen ist bevorzugt, dass der Gehalt an organischen Lösemitteln im der erfindungsgemäßen Pigmentpräparation unter 2 Gew.-%, bevorzugt unter 1 Gew.-% und besonders bevorzugt unter 0,5 Gew.-% liegt, um die VOC- und/oder Geruchsbelastung so gering wie möglich zu halten.

Ein Verfahren zur Herstellung der erfindungsgemäßen Pigmentpräparation umfasst folgende Schritte:
a) Vermischen und vorzugsweise Homogenisieren eines Metalleffektpigmentes, welches mindestens eine niedrig brechende Schicht auf dem metallischen Kern des Metalleffektpigmentes aufweist, wobei die niedrig brechende Schicht mindestens eine anorganische Komponente enthält oder daraus besteht, mit wenigstens einem Styrolgruppen-freien Bindemittel, welches eine Säurezahl von 150 - 500 mg KOH/g Bindemittel und einen Schmelzpunkt oder Schmelzbereich, der im Bereich von 120 - 200 °C liegt, aufweist,
b) Kompaktieren der in Schritt a) erhaltenen Mischung a)
c) optional Trocknen.

Das Kompaktieren umfasst hierbei bevorzugt Tablettieren, Brikettieren, Pelletieren, Rollieren, Wirbelschichtgranulieren, Granulieren, Sprühgranulieren, Extrudieren oder Kombinationen davon.

Das Metalleffektpigment sowie etwaige weitere Pigmente, beispielsweise Perlglanzpigmente oder Farbpigmente, wird/werden entweder in Pulverform oder in Form einer Paste vorgelegt. Bei Verwendung einer Paste enthält diese vorzugsweise das gleiche Lösemittel, wie die anschließend zuzumischende Bindemittellösung, vorzugsweise Harzlösung. Die Verwendung gleicher Lösemittel erleichtert die Wiederverwendbarkeit des Lösemittels nach der Austrocknung der Pigmentpräparation ohne aufwendige Trennung, die bei Verwendung verschiedener Lösemittel erforderlich wird.

Als Lösemittel sowohl für die Pigmentpräparation und/oder Effektpigmentpaste als auch für die Bindemittellösung, vorzugsweise Harzlösung, eignen sich in der Pigmentverarbeitung übliche Lösemittel, wie Aromaten, Aliphaten, Ester, Glykole und/oder Alkohole. Besonders bevorzugt sind hierbei Lösemittel mit einem Siedepunkt von unter 100°C vorzugsweise unter 90°C.

Weiter bevorzugt werden wasserverträgliche Lösemittel verwendet, damit Reste an eventuell vorhandenem unpolarem und/oder hydrophobem Lösemittel in der Präparation keine Kompatibilitätsprobleme bei einer Verwendung in Wasserlacken hervorrufen. Der Gehalt an unpolarem und/oder hydrophobem Lösemittel beträgt vorzugsweise weniger als 1 Gew.-%, noch weiter bevorzugt weniger als 0,1 Gew.-%, jeweils bezogen auf das Gesamtgewicht der Pigmentpräparation.

Vorzugsweise werden als wasserverträgliches Lösemittel Ester, Glykole und/oder Alkohole verwendet.

Die Bindemittellösung, vorzugsweise Harzlösung, wird hergestellt durch Vorlage des Lösemittels und anschließendem Eintrag des Bindemittels, vorzugsweise Harzes.

Nach vollständiger Auflösung des Bindemittels, vorzugsweise Harzes, kann nach Bedarf Neutralisationsmittel zugesetzt werden.

Die nach der Formgebung vorzugsweise erfolgende Austrocknung der noch feuchten kompaktierten Pigmentpräparation erfolgt vorzugsweise bei Temperaturen zwischen 30°C und 120°C, vorzugsweise jedoch bei Temperaturen zwischen 60°C und 100°C. Zur Beschleunigung kann der Trocknungsvorgang unter reduziertem Druck durchgeführt werden. Die Trocknung erfolgt vorzugsweise ohne Bewegung oder Mischung der kompaktierten Pigmentpräparation.

Es werden nach der Trocknung staubarme, vorzugsweise staubfreie, formstabile und annähernd geruchsfreie kompaktierte Pigmentpräparationen, vorzugsweise als Granulate, Pellets, Kugeln, Chips, Briketts, Tabletten, Würstchen etc., erhalten, die vorzugsweise Teilchengrößen aus einem Bereich von 0,1 mm bis 15 mm, bevorzugt von 0,2 mm bis 10 mm, aufweisen.

Die trockene, erfindungsgemäße kompaktierte Pigmentpräparation zeichnet sich durch gute Rieselfähigkeit und Dosierbarkeit aus. Die Anwendung der erfindungsgemäßen Pigmentpräparation kann sowohl in wasserbasierenden, als auch in lösemittelbasierenden Farben, Lacken, wie zum Beispiel Automobil- und Industrielacken, Coatings, Druckfarben und kosmetischen Formulierungen erfolgen. Ferner ist die Einfärbung von Kunststoffen mit der Metallpigmentpräparation möglich. Bei der Anwendung in wasserbasierenden Systemen kann das erfindungsgemäße Präparat in Wasser oder üblichen Colösern, wie zum Beispiel Butylglycol, angeschlämmt werden. Zur Vereinfachung der Verarbeitung ist auch eine direkte Einarbeitung in das wasserbasierende Anwendungsmedium möglich, was einen großen Vorteil gegenüber Pasten und Pulvern darstellt. In beiden Fällen zeigt das erfindungsgemäße Präparat hervorragende Dispergiereigenschaften und kann rückstandslos verarbeitet werden.

Auch bei der Anwendung in lösemittelbasierenden Systemen kann das erfindungsgemäße Präparat entweder in einem geeigneten Lösemittel vordispergiert und anschließend in den Lack beziehungsweise in die Farbe eingearbeitet werden, oder aber direkt in den Lack beziehungsweise die Farbe eindispergiert werden.

Durch das hervorragende Dispergierverhalten der erfindungsgemäßen Pigmentpräparation werden in Lackanwendungen im Vergleich zu entsprechenden Pigmentpasten oder -pulvern deutlich höhere Deckfähigkeiten erzielt.

Da Metalleffektpigmente reaktiv sind, können bei längerer Lagerung Veränderungen eintreten. Diese zeigen sich in erster Linie durch eine Bildung von Pigmentaggregaten, also verwachsenen Verbänden von flächig aneinander gelagerten Primärteilchen. Der Begriff "Aggregat" ist im "Lehrbuch der Lacktechnologie", 2. Auflage, 2000, Vincentz Verlag Hannover, definiert. Die Aggregation hat eine Veränderung der Teilchengrößenverteilung zur Folge, was zu einer Verminderung der Deckfähigkeit des Pigmentes führt. Die erfindungsgemäße Pigmentpräparation zeichnet sich durch geringe Veränderungen während der Lagerzeit aus.

Die erfindungsgemäßen Pigmentpräparationen finden Verwendung in wasser- oder lösemittelbasierenden Lacken, Farben, Coatings, Druckfarben, kosmetischen Formulierungen oder in Kunststoffen.

Besonders bevorzugt finden die erfindungsgemäßen Pigmentpräparationen Verwendung in Lacken, Farben, Coatings, Druckfarben oder kosmetischen Formulierungen, die auf wässriger Basis aufgebaut sind.

Die der vorliegenden Erfindung zugrundliegende Aufgabe wird mithin auch durch Bereitstellung von Lacken, Farben, Druckfarben, Kunststoffen oder kosmetischen Formulierungen gelöst, die eine erfindungsgemäße Pigmentpräparation enthalten.

Die der vorliegenden Erfindung zugrundliegende Aufgabe wird auch durch Bereitstellung von Lacken, Farben, Druckfarben oder kosmetischen Formulierungen gelöst, die eine erfindungsgemäße Pigmentpräparation enthalten und auf einer wässerigen Basis aufgebaut sind. Besonders bevorzugt sind Wasserlacke, die die erfindungsgemäße Pigmentpräparation enthalten.

Ebenfalls wird die der Erfindung zugrundliegende Aufgabe durch Bereitstellung eines Gegenstandes gelöst, der die erfindungsgemäße Pigmentpräparation oder einen Lack, eine Farbe oder Druckfarbe, die die erfindungsgemäße Pigmentpräparation enthält, aufweist.

Der Gegenstand kann beispielsweise eine Automobilkarosserie, ein elektrisches Gerät, ein Fassadenelement oder eine Druckunterlage wie beispielsweise eine Folie, ein Papier oder Karton, sein.

### Ausführungsbeispiele:

### Erfindungsgemäßes Beispiel 1:

12,1 g Erkamar 3300 (Maleinatharz der Fa. Robert Kraemer, Säurezahl: 300 mg KOH / g Harz, Schmelzpunkt 140 ± 10 °C; Hydroxylzahl: 0 mg KOH / g Harz,) wurden in 21,8 g Isopropylalkohol gelöst und anschließend mit 9,7 g Triethanolamin versetzt und mittels eines Dispergiergerätes (Silverson L4RT) homogenisiert.
Diese Lösung wurde in die Aluminiumeffektpigmentpaste STAPA^{®} Hydrolux 600 (Effektpigment der Fa. ECKART) eingetragen und mittels eines Mischgerätes homogenisiert. Die verwendete Pastenmenge enthielt 123,4 g Aluminiumeffektpigment. Die homogenisierte Präparation wurde mittels einer Presse mit Stempel und Lochplatte zu Granulaten/Würstchen von einer Länge von ca. 2 - 10 mm und einem Durchmesser von ca. 2 - 3 mm verarbeitet. Die Trocknung erfolgte innerhalb von 24 Stunden bei 75°C im Vakuum (100 mbar) in einem Vakuumtrockenschrank.

### Erfindungsgemäßes Beispiel 2:

12,1 g Erkamar 3300 wurden in 21,8 g Isopropylalkohol gelöst und anschließend mit 9,7 g Triethanolamin versetzt und mittels eines Dispergiergerätes (Silverson L4RT).homogenisiert.
Diese Lösung wurde in die Aluminiumeffektpigmentpaste STAPA^{®} Hydrolan 701 (Effektpigment der Fa. ECKART) eingetragen und mittels eines Mischgerätes homogenisiert. Die verwendete Pastenmenge enthielt 123,4 g Aluminiumeffektpigment. Die homogenisierte Präparation wurde mittels einer Presse mit Stempel und Lochplatte. zu Granulaten/Würstchen von einer Länge von ca. 2 - 10 mm und einem Durchmesser von ca. 2 - 3 mm verarbeitet. Die Trocknung erfolgte innerhalb von 24 Stunden bei 75°C im Vakuum (100 mbar) in einem Vakuumtrockenschrank.

### Erfindungsgemäßes Beispiel 3:

14,2 g Erkamar 3270 (Maleinatharz der Fa. Robert Kraemer, Säurezahl: 200 mg KOH / g Harz; Schmelzpunkt 160 ± 10 °C; Hydroxylzahl: 30 mg KOH / g Harz) wurden in 21,8 g Isopropylalkohol gelöst und anschließend mit 7,6 g Triethanolamin versetzt und mittels eines Dispergiergerätes (Silverson L4RT) homogenisiert.
Diese Lösung wurde in die Aluminiumeffektpigmentpaste STAPA^{®} Hydrolan 701 (Effektpigment der Fa. ECKART) eingetragen und mittels eines Mischgerätes homogenisiert. Die verwendete Pastenmenge enthielt 123,4 g Aluminiumeffektpigment. Die homogenisierte Präparation wurde mittels einer Presse mit Stempel und Lochplatte zu Granulaten/Würstchen von einer Länge von ca. 2 - 10 mm und einem Durchmesser von ca. 2 - 3 mm verarbeitet. Die Trocknung erfolgte 24 Stunden bei 75°C im Vakuum (100 mbar) in einem Vakuumtrockenschran k.

### Erfindungsgemäßes Beispiel 4:

12,1 g Erkamar 3300 (Maleinatharz der Fa. Robert Kraemer) wurden in 21,8g Isopropylalkohol gelöst und anschließend mit 9,7 g Triethanolamin versetzt und mittels eines Dispergiergerätes (Silverson L4RT) homogenisiert.
Diese Lösung wurde in die Aluminiumeffektpigmentpaste STAPA Aloxal^{®} 301 0 (Effektpigment der Fa. ECKART) eingetragen und mittels eines Mischgerätes homogenisiert. Die verwendete Pastenmenge enthielt 123,4 g Aluminiumeffektpigment. Die homogenisierte Präparation wurde mittels einer Presse mit Stempel und Lochplatte zu Granulaten/Würstchen von einer Länge von ca. 2 - 10 mm und einem Durchmesser von ca. 2 - 3 mm verarbeitet. Die Trocknung erfolgte innerhalb von 24 Stunden bei 75°C im Vakuum (100 mbar) in einem Vakuumtrockenschrank.

### Erfindungsgemäßes Beispiel 5:

14,2 g WorléeSin MS 265 (Maleinatharz der Fa. Worlée-Chemie GmbH; Säurezahl: 190 - 220 mg KOH/g Harz; Erweichungspunkt: 160 - 180 °C (DIN 53181) wurden in 21,8 g Isopropylalkohol gelöst und anschließend mit 7,6 g Triethanolamin versetzt und mittels eines Dispergiergerätes (Silverson L4RT) homogenisiert.
Diese Lösung wurde in die Aluminiumeffektpigmentpaste STAPA^{®} Hydrolan 701 (Effektpigment der Fa. ECKART) eingetragen und mittels eines Mischgerätes homogenisiert. Die verwendete Pastenmenge enthielt 123,4 g Aluminiumeffektpigment. Die homogenisierte Präparation wurde mittels einer Presse mit Stempel und Lochplatte zu Granulaten/Würstchen von einer Länge von ca. 2 - 10 mm und einem Durchmesser von ca. 2 - 3 mm verarbeitet. Die Trocknung erfolgte innerhalb von 24 Stunden bei 75°C im Vakuum (100 mbar) in einem Vakuumtrockenschrank.

### Vergleichsbeispiel 6:

6,7 g SMA^{®}-1440 F (styrolmodifiziertes Maleinatharz der Fa. Cray-Valley; Säurezahl: 165 - 205 mg KOH/g Harz; Glastemperatur: 60 °C) wurde in 47,9 g VE-Wasser und 1,8 g 25 %-iger Ammoniaklösung gelöst. Nach der Auflösung des Harzes erfolgte die Zudosierung von 1,6 g Polyethylenglycol 2000 und die Mischung wurde solange mittels eines Dispergiergerätes (Silverson L4RT) homogenisiert, bis eine klare Lösung entstand.
Diese Lösung wurde in die Aluminiumeffektpigmentpaste STAPA^{®} Hydrolan 701 (Effektpigment der Fa. ECKART) eingetragen und mittels eines Mischgerätes homogenisiert. Die verwendete Pastenmenge enthielt 100 g Aluminiumeffektpigment. Nach homogener Vermischung wurde die so hergestellte Präparation zu Granulaten/Würstchen von einer Länge von ca. 2 - 10 mm und einem Durchmesser von ca. 2 - 3 mm mittels einer Presse mit Stempel und Lochplatte verarbeitet. Die Trocknung erfolgte innerhalb von 24 Stunden bei 80°C im Vakuum (100 mbar) in einem Vakuumtrockenschrank.

### Vergleichsbeispiel 7 (entsprechend Beispiel 1 der EP 1 153 995):

13,5 g Erkamar VP 2975 (Maleinatharz der Fa. Robert Kraemer, Säurezahl: 170 mg KOH / g Harz, Hydroxylzahl: 78 mg KOH / g Harz, Schmelzpunkt 90 °C) wurde in 40,9 g VE-Wasser, welches auf 50 °C erwärmt war, eingetragen und mittels eines Flügelrührers gerührt. Anschließend wurden 3,0 g 25 Gew.-%-ige Ammoniaklösung langsam zugegeben. Es wurde solange gerührt, bis das Harz vollständig gelöst war. Zuletzt wurden 40,9 g Wasser und 3,0 g Polyethylenglycol 2000 zugegeben. Die gesamte Mischung wurde noch 5 min gerührt.
Anschließend erfolgte der Eintrag dieser Lösung in die Aluminiumeffektpigmentpaste STAPA^{®} Hydrolan 701 (Effektpigment der Fa. ECKART). Die verwendete Pastenmenge enthielt 148,8 g Aluminiumeffektpigment. Nach homogener Vermischung in einem Mischgerät wurde die so hergestellte Präparation zu Granulaten/Würstchen von einer Länge von ca. 2 - 10 mm und einem Durchmesser von ca. 2 - 3 mm mittels einer Presse mit Stempel und Lochplatte verarbeitet. Die Trocknung erfolgte innerhalb von 24 Stunden bei 80°C im Vakuum (100 mbar) in einem Vakuumtrockenschrank.

### Vergleichsbeispiel 8 (entsprechend Beispiel 2 der EP 1 153 995,):

13,5 g Erkamar VP 2975 wurde in 40,9 g VE-Wasser, welches auf 50 °C erwärmt war, eingetragen und mittels eines Flügelrührers gerührt. Anschließend wurden 3,0 g 25%ige Ammoniaklösung langsam zugegeben. Es wurde gerührt, bis das Harz vollständig gelöst war. Zuletzt wurden 40,9 g Wasser und 3,0 g Hydropalat 875 (Na-Salz der Sulfobernsteinsäure, Fa. Henkel zugegeben. Die gesamte Mischung wurde noch 5 min gerührt.
Anschließend erfolgte der Eintrag dieser Lösung in die Aluminiumeffektpigmentpaste STAPA^{®} Hydrolan 701 (Effektpigment der Fa. ECKART). Die verwendete Pastenmenge enthielt 148,8 g Aluminiumeffektpigment. Nach homogener Vermischung in einem Mischgerät wurde die so hergestellte Präparation zu Granulaten/Würstchen von einer Länge von ca. 2 - 10 mm und einem Durchmesser von ca. 2 - 3 mm mittels einer Presse mit Stempel und Lochplatte verarbeitet. Die Trocknung erfolgte innerhalb von 24 Stunden bei 80°C im Vakuum (100 mbar) in einem Vakuumtrockenschrank.

### Vergleichsbeispiel 9:

12,5 g Erkamar VP 2975 wurde in 40,9 g VE-Wasser, welches auf 50°C erwärmt war, eingetragen und mittels eines Flügelrührers gerührt. Anschließend wurden 3,0 g 25%-ige Ammoniaklösung langsam zugegeben. Es wurde gerührt, bis das Harz vollständig gelöst war. Die gesamte Mischung wurde noch 5 min gerührt.
Diese Lösung wurde in die Aluminiumeffektpigmentpaste STAPA^{®} Hydrolan 701 (Effektpigment der Fa. ECKART) eingetragen. Die verwendete Pastenmenge enthielt 123,4 g Aluminiumeffektpigment. Die homogenisierte Präparation wurde zu Granulaten/Würstchen von einer Länge von ca. 2 - 10 mm und einem Durchmesser von ca. 2 - 3 mm mittels einer Presse mit Stempel und Lochplatte verarbeitet. Die Trocknung erfolgte innerhalb von 24 Stunden bei 75°C im Vakuum (100 mbar) in einem Vakuumtrockenschrank.

Die Gehalte an Aluminiumeffektpigment und Harz der vorstehenden Beispiele sind in Tabelle 1 zusammengestellt.

**Tab. 1:**

| Probe | Gehalt Metallpigment [Gew.-% bezogen auf Gesamtgewicht Präparation] | Gehalt Harz [Gew.-% bezogen auf Gesamtgewicht Präparation] |
|---|---|---|
| Beispiel 1 | 85,0 | 15,0 |
| Beispiel 2 | 85,0 | 15,0 |
| Beispiel 3 | 85,0 | 15,0 |
| Beispiel 4 | 85,0 | 15,0 |
| Beispiel 5 | 85,0 | 15,0 |
| Vergleichsbeispiel 6 | 91,9 | 6,6 |
| Vergleichsbeispiel 7 | 89,6 | 8,6 |
| Vergleichsbeispiel 8 | 89,6 | 8,6 |
| Vergleichsbeispiel 9 | 90,3 | 9,7 |

### Prüfergebnisse der Pigmentpräparation der erfindungsgemäßen Beispiele und der Vergleichsbeispiele:

Die Pigmentpräparationen der erfindungsgemäßen Beispiele und Vergleichsbeispiele wurden einer Prüfung hinsichtlich der Festigkeit und Staubfreiheit der getrockneten Pigmentpräparation, einer Beurteilung der Dispergierbarkeit im Wasserlack, der Deckfähigkeit und der Lagerstabilität unterzogen.

### A Festigkeit und Staubfreiheit:

Zur Prüfung der Festigkeit und Staubfreiheit der trockenen Granulate wurden 5,0 Gramm des jeweiligen Präparates in einen Standzylinder mit einem lichten Durchmesser von 4 cm und einer Höhe von 25 cm gefüllt. Ein Gewicht zylindrischer Form (Durchmesser 3 cm, Höhe 4,5 cm) mit einer Masse von 100 Gramm ließ man aus 25 cm Höhe auf die Präparatschüttung im Standzylinder fallen. Anschließend wurde die Präparatschüttung entleert und durch Sichtprüfung ausgewertet. In Anlehnung an die DIN 53230 lag der Beurteilung folgendes Bewertungsschema zugrunde:

| | |
|---|---|
| Note 0 | Hervorragende Festigkeit, keine Staubbildung |
| Note 1 | Hervorragende Festigkeit, geringste Staubbildung |
| Note 2 | gute Festigkeit, geringe Staubbildung |
| Note 3 | mäßige Festigkeit, merkliche Staubbildung |
| Note 4 | Vor der Prüfung Staubbildung, nach der Prüfung zerfallenes Granulat, überwiegender Staubanteil |
| Note 5 | Bereits vor der Prüfung zerfallenes Granulat |

### Ergebnisse der Beispiele:

**Tabelle 2: Festigkeit und Staubfreiheit**

| Probe | Note |
|---|---|
| Beispiel 1 | 1 |
| Beispiel 2 | 2 |
| Beispiel 3 | 1 |
| Beispiel 4 | 2 |
| Beispiel 5 | 2 |
| Vergleichsbeispiel 6 | 3 |
| Vergleichsbeispiel 7 | 4 |
| Vergleichsbeispiel 8 | 4 |
| Vergleichsbeispiel 9 | 3 |

Mithin ergibt sich eine deutlich höhere Festigkeit und Staubfreiheit der Pigmentpräparation der erfindungsgemäßen Beispiele. Die Festigkeit ist auch ein Maß für die Formbeständigkeit. Die Pigmentpräparationen der Vergleichsbeispiele aus dem Stand der Technik sind nicht ausreichend fest bzw. formbeständig.

### B Dispergierbarkeit und Deckfähigkeit im Wasserlack:

Die trockene Pigmentpräparation wurde mit dem jeweiligen Ausgangsmaterial, also der jeweiligen Aluminiumeffektpigmentpaste oder dem jeweiligen Aluminiumeffektpigmentpulver in Bezug auf Dispergierbarkeit der Aluminiumeffektpigmente und Deckfähigkeit der erhaltenen Zusammensetzung verglichen. Hierzu wurde das jeweilige Material in konstanter Pigmentierungshöhe hinsichtlich des Aluminiumeffektpigmentgehaltes in einen wässrigen Prüflack eingearbeitet und durch Rakelapplikation (Spiralrakel 50µm) auf eine Schwarz-Weiß-Deckungskarte der Fa. Byk-Chemie GmbH, Deutschland aufgezogen. Als Prüflack wurde der Hydrostammlack L 8900623 (Fa. Votteler, Deutschland) verwendet.
Die Beurteilung der Deckfähigkeit erfolgte visuell auf der Deckungskarte.

**Tab. 3: Dispergierbarkeit und Deckfähigkeit im Prüflack**

| **Probe** | **Visuelle Beurteilung Dispergierbarkeit** | **Visuelle Beurteilung Deckfähigkeit im Vergleich zum Ausgangsmaterial** |
|---|---|---|
| Beispiel 1 | Im Vergleich zum Ausgangsmaterial war die trockene Pigmentpräparation deutlich leichter im Prüflack dispergierbar. | Außerordentlich höhere Deckfähigkeit. Das Schwarz-Weiß-Muster der Deckungskarte war deutlich weniger sichtbar |
| Beispiel 2 | Im Vergleich zum Ausgangsmaterial war die trockene Pigmentpräparation deutlich leichter im Prüflack dispergierbar. | Höhere Deckfähigkeit. Das Schwarz-Weiß-Muster der Deckungskarte war weniger sichtbar |
| Beispiel 3 | Im Vergleich zum Ausgangsmaterial war die trockene Pigmentpräparation deutlich leichter im Prüflack dispergierbar. | Höhere Deckfähigkeit. Das Schwarz-Weiß-Muster der Deckungskarte war deutlich weniger sichtbar |
| Beispiel 4 | Im Vergleich zum Ausgangsmaterial war die trockene Pigmentpräparation deutlich leichter im Prüflack dispergierbar. | Geringere Deckfähigkeit. Das Schwarz-Weiß-Muster der Deckungskarte war deutlicher sichtbar |
| Beispiel 5 | Im Vergleich zum Ausgangsmaterial war die trockene Pigmentpräparation deutlich leichter im Prüflack dispergierbar. | Höhere Deckfähigkeit. Das Schwarz-Weiß-Muster der Deckungskarte war weniger sichtbar |
| Vergleichsbeispiel 6 | Im Vergleich zum Ausgangsmaterial war die trockene Pigmentpräparation nur schwer dispergierbar. Die Einarbeitbarkeit in den Lack war deutlich schlechter als beim Ausgangsmaterial | Deutlich geringere Deckfähigkeit. Das Schwarz-Weiß-Muster der Deckungskarte trat deutlich stärker hervor. |
| Vergleichsbeispiel 7 | Die Dispergierbarkeit der trockenen Pigmentpräparation verhielt sich ähnlich wie beim Ausgangsmaterial | Annähernd gleiche Deckfähigkeit |
| Vergleichsbeispiel 8 | Die Dispergierbarkeit der trockenen Pigmentpräparation verhielt sich ähnlich wie beim Ausgangsmaterial | Annähernd gleiche Deckfähigkeit |
| Vergleichsbeispiel 9 | Die Dispergierbarkeit der trockenen Pigmentpräparation verhielt sich ähnlich wie beim Ausgangsmaterial | Annähernd gleiche Deckfähigkeit |

Wie den Ergebnissen der Tabelle 3 zu entnehmen ist, wiesen die erfindungsgemäßen Pigmentpräparationen eine bessere Deckfähigkeit im Wasserlack auf als die üblicherweise verwendeten Effektpigmentpasten. Dies ist ein äußerst überraschender Effekt, da normalerweise eine bestenfalls gleichbleibende Deckfähigkeit einer Effektpigmentpräparation von Metalleffektpigmenten im Vergleich zu der üblichen Pastenform zu beobachten ist.

Dieses Ergebnis war vermutlich darauf zurückzuführen, dass die Lösemittel der Effektpigmentpasten (Ausgangsmaterial), die herstellungsbedingt noch bis zu 6 Gew.-% wasserunverträgliche (unpolare und/oder hydrophobe) Lösemittel wie Testbenzin und/oder Aromaten wie Solvent Naphtha enthalten, eine geringere Kompatibilität der Effektpigmente mit dem Wasserlack verursachen. Hierdurch ist auch die Dispergierbarkeit der Aluminiumeffektpigmente im Wasserlack beeinträchtigt, da die Pigmente offenbar besonders gut durch diese unpolaren und/oder hydrophoben Lösemittel benetzt werden.

In der erfindungsgemäßen Effektpigmentpräparation waren diese unpolaren und/oder hydrophoben Lösemittel weitgehend nicht mehr vorhanden (Lösemittelgehalt < 1 Gew.-%).

Die Pigmentpräparation des Vergleichsbeispiels 6 wies eine deutlich geringere Deckfähigkeit als die Ausgangspigmentpaste auf. Diese geringe Deckfähigkeit war vermutlich auf den Zusatz an Polyethylenglycol und die Verwendung eines Styrolgruppen enthaltenden Bindemittels zurückzuführen.

Die Pigmentpräparationen der anderen Vergleichsbeispiele wiesen lediglich eine ähnliche Deckfähigkeit wie die Effektpigmentpaste (Ausgangsmaterial) auf, obwohl auch sie selbstverständlich den Vorteil des weitgehend abwesenden unpolaren und/oder hydrophoben Lösemittels der Pigmentpaste besaßen. Dies war vermutlich auf das Harz zurückzuführen. Es wird vermutet dass dieses eine zu geringe Säurezahl und vor allem eine zu geringe Erweichungstemperatur aufwies. Bei einer zu geringen Säurezahl ist die Kompatibilität mit dem Wasserlack nicht optimal. Bei einem zu geringen Schmelzpunkt oder Schmelzintervall kann es bereits zu einer teilweisen Verblockung und damit zur Bildung von Effektpigmentagglomeraten während der Herstellung der Granulate kommen. Diese Agglomerate verringern natürlicherweise die Deckfähigkeit, selbst wenn die Agglomerate so klein sind, dass die optischen Eigenschaften nicht wesentlich beeinträchtigt sind.

### C Lagerstabilität:

Zur Simulierung einer Lagerzeit von mehreren Monaten wurde die trockene Pigmentpräparation jeweils für vier Wochen bei 50°C eingelagert und anschließend durch Rakelapplikation mit dem unbelasteten (nicht bei 50°C eingelagerten) trockenen Präparat verglichen.
Hierzu wurde die jeweilige Pigmentpräparation in einen wässrigen Prüflack eingearbeitet und durch Rakelapplikation (Spiralrakel 50 µm) auf eine Deckungskarte aufgezogen. Als Prüflack wurde wiederum der Hydrostammlack L 8900623 (Fa. Votteler) verwendet
Die Beurteilung der Deckfähigkeit und der Aggregatbildung erfolgte visuell.

**Tab. 4: Beurteilung Lagerstabilität der bei 50°C-gelagerten Probe:**

| Probe | Visuelle Beurteilung anhand des Rakelabzugs |
|---|---|
| Beispiel 1 | Die Deckfähigkeit verringerte sich leicht, |
| | es war keine Aggregatbildung feststellbar. |
| Beispiel 2 | Die Deckfähigkeit blieb voll erhalten, |
| | es war keine Aggregatbildung feststellbar. |
| Beispiel 3 | Die Deckfähigkeit blieb voll erhalten, |
| | es war keine Aggregatbildung feststellbar. |
| Beispiel 4 | Die Deckfähigkeit verbesserte sich sichtbar, |
| | es war keine Aggregatbildung feststellbar |
| Beispiel 5 | Die Deckfähigkeit blieb voll erhalten, |
| | es war keine Aggregatbildung feststellbar. |
| Vergleichsbeispiel 6 | Vollständiger Verlust an Deckfähigkeit, das Schwarz-Weiß-Muster der Deckungskarte trat fast vollständig hervor. |
| | Der Lackfilm war rau und von starker Bildung von Pigmentaggregaten gekennzeichnet (stippig). |
| Vergleichsbeispiel 7 | Die Deckfähigkeit blieb voll erhalten, |
| | es war keine Aggregatbildung feststellbar. |
| Vergleichsbeispiel 8 | Die Deckfähigkeit blieb voll erhalten, |
| | es war keine Aggregatbildung feststellbar. |
| Vergleichsbeispiel 9 | Die Deckfähigkeit blieb voll erhalten, |
| | es war keine Aggregatbildung feststellbar. |

Die Pigmentpräparation des Vergleichsbeispiels 6 zeigte einen vollständigen Verlust der Lagerstabilität. Dies war vermutlich auf den Zusatz an Polyethylenglycol zurückzuführen.
Ansonsten bestanden zwischen den Pigmentpräparationen der erfindungsgemäßen und der Vergleichsbeispiele bei diesen Beurteilungspunkten keine bis nur geringe Unterschiede.

## Patentansprüche

1. Pigmentpräparation mit Metalleffektpigmenten in kompaktierter Form,
**dadurch gekennzeichnet,**
**dass** die Pigmentpräparation folgende Komponenten umfasst:
a) 60 - 95 Gew.-% mindestens eines Metalleffektpigmentes, welches mindestens eine niedrigbrechende Schicht auf dem metallischen Kern des Metalleffektpigmentes aufweist., wobei der Brechungsindex der niedrigbrechenden Schicht kleiner als 2,2 ist und wobei die niedrigbrechende Schicht mindestens eine anorganische Komponente enthält oder daraus besteht,
b) 0,5 - 40 Gew.-% eines Styrolgruppen-freien Bindemittels mit einer Säurezahl von 150 - 500 mg KOH/g Bindemittel und einem Schmelzpunkt oder Schmelzbereich, der im Bereich von 120 - 200 °C liegt,
c) einen Restfeuchtegehalt im Bereich von 0 - 15 Gew.-% Wasser und/oder organischem Lösemittel bzw. Lösemittelgemisch
d) optional Neutralisierungsmittel.

2. Pigmentpräparation nach Anspruch 1,
**dadurch gekennzeichnet,**
**dass** die anorganische Komponente der mindestens einen niedrigbrechenden Schicht mindestens ein Metalloxid-, Metallhydroxid- und/oder Metalloxidhydrat ist.

3. Pigmentpräparation nach Anspruch 2,
**dadurch gekennzeichnet,**
**dass** die anorganische Komponente der niedrigbrechenden Schicht oder die niedrigbrechende Schicht, die eine anorganische Metalloxid-, Metallhydroxid- und/oder Metalloxidhydratschicht ist, aus der Gruppe, bestehend aus Oxiden, Hydroxiden oder Oxidhydraten der Elemente Silicium, Aluminium, Chrom, Chrom-Metall-Legierungen, Vanadium, Molybdän und deren Mischungen und deren Kombinationen, ausgewählt wird.

4. Pigmentpräparation nach Anspruch 3,
**dadurch gekennzeichnet,**
**dass** die anorganische Metalloxid-, Metallhydroxid- und/oder Metalloxidhydratschicht aus der Gruppe, die aus Oxiden, Hydroxiden oder Oxidhydraten der Elemente Silicium, Aluminium, Chrom, Chrom-Metall-Legierungen, Molybdän und Mischungen und Kombinationen davon besteht, ausgewählt wird und eine Schichtdicke von 5 bis 90 nm aufweist.

5. Pigmentpräparation nach einem der vorstehenden Ansprüche,
**dadurch gekennzeichnet,**
**dass** das Bindemittel eine Säurezahl von über 200 - 500 mg KOH/g Harz, vorzugsweise von 250 - 400 mg KOH/g Harz, aufweist.

6. Pigmentpräparation nach einem der vorstehenden Ansprüche,
**dadurch gekennzeichnet,**
**dass** das Bindemittel einen Hydroxylgruppengehalt von 0 - 25 mg KOH/g Bindemittel aufweist.

7. Pigmentpräparation nach einem der vorstehenden Ansprüche,
**dadurch gekennzeichnet,**
**dass** die Pigmentpräparation 0 - 25 Gew.-% mindestens eines Additivs enthält.

8. Pigmentpräparation nach einem der vorstehenden Ansprüche,
**dadurch gekennzeichnet,**
**dass** das Bindemittel ein modifiziertes bzw. funktionalisiertes Bindemittel aus der Gruppe der Maleinatharze ist.

9. Pigmentpräparation nach einem der vorstehenden Ansprüche,
**dadurch gekennzeichnet,**
**dass** die kompaktierte Form aus der Gruppe, die aus Granulaten, Pellets, Briketts, Chips, Tabletten, Würstchen und Mischungen davon besteht, ausgewählt wird.

10. Verfahren zur Herstellung einer Pigmentpräparation nach einem der vorstehenden Ansprüche,
**dadurch gekennzeichnet,**
**dass** es folgende Schritte umfasst:
a) Vermischen eines Metalleffektpigmentes, welches mindestens eine niedrigbrechende Schicht auf dem metallischen Kern des Metalleffektpigmentes aufweist, wobei der Brechungsindex der niedrigbrechenden Schicht kleiner als 2,2 ist und wobei die niedrigbrechende Schicht mindestens eine anorganische Komponente enthält oder daraus besteht, mit wenigstens einem Styrolgruppen-freien Bindemittel, welches eine Säurezahl von 150 - 500 mg KOH/g Bindemittel und einen Schmelzpunkt oder Schmelzbereich, der im Bereich von 120 - 200 °C liegt, aufweist,
b) Kompaktieren der in Schritt a) erhaltenen Mischung,
c) optional Trocknen.

11. Verfahren zur Herstellung einer Pigmentpräparation nach Anspruch 10,
**dadurch gekennzeichnet,**
**dass** das Kompaktieren aus der Gruppe, bestehend aus Tablettieren, Brikettieren, Pelletieren, Rollieren, Wirbelschichtgranulieren, Granulieren, Sprühgranulieren, Extrudieren oder Kombinationen derselben, ausgewählt wird.

12. Verwendung einer Pigmentpräparation nach einem der Ansprüche 1 bis 9 in wasser- oder lösemittelbasierenden Lacken, Farben, Coatings, Druckfarben, kosmetischen Formulierungen oder in Kunststoffen.

13. Beschichtungszusammensetzung, insbesondere Lacke, Farben, Coatings, Druckfarben, kosmetische Formulierungen, oder Kunststoffe, die eine Pigmentpräparation nach einem der Ansprüche 1 bis 9 enthalten.

14. Beschichtungszusammensetzung, insbesondere Lacke, Farben, Coatings, Druckfarben oder kosmetische Formulierungen, nach Anspruch 13, die auf wässriger Basis aufgebaut ist.

15. Gegenstand,
**dadurch gekennzeichnet,**
**dass** der Gegenstand eine Pigmentpräparation nach einem der Ansprüche 1 bis 9 oder eine Beschichtungszusammensetzung nach einem der Ansprüche 13 bis 14 aufweist oder enthält oder einen Kunststoff nach Anspruch 13 enthält oder daraus besteht.

## Claims

1. Pigment preparation comprising metal effect pigments in compacted form,
**characterised in that**
the pigment preparation comprises the following components:
a) 60 - 95 % by weight of at least one metal effect pigment having at least one low refractive layer on the metallic core of the metal effect pigment, the refractive index of the low refractive layer being less than 2.2 and the low refractive layer containing or comprising at least one inorganic component,
b) 0.5 - 40 % by weight of a binding agent which is free from styrene groups having an acid number of 150 - 500 mg KOH/g binding agent and a melting point or melting range in the range of 120 - 200°C,
c) a residual moisture content in the range of 0 - 15 % by weight of water and/or organic solvent or solvent mixture,
d) optionally neutralising agent.

2. Pigment preparation as claimed in claim 1,
**characterised in that**
the inorganic component of the at least one low refractive layer is at least one metal oxide, metal hydroxide and/or metal oxide hydrate.

3. Pigment preparation as claimed in claim 2,
**characterised in that**
the inorganic component of the low refractive layer or the low refractive layer, which is an inorganic metal oxide, metal hydroxide and/or metal oxide hydrate layer, is selected from the group comprising oxides, hydroxides or oxide hydrates of the elements silicon, aluminium, chromium, chromium-metal alloys, vanadium, molybdenum and mixtures thereof and combinations thereof.

4. Pigment preparation as claimed in claim 3,
**characterised in that**
the inorganic metal oxide, metal hydroxide and/or metal oxide hydrate layer is selected from the group comprising oxides, hydroxides or oxide hydrates of the elements silicon, aluminium, chromium, chromium-metal alloys, molybdenum and mixtures and combinations thereof, and has a layer thickness of 5 to 90 nm.

5. Pigment preparation as claimed in one of the preceding claims,
**characterised in that**
the binding agent has an acid number of more than 200 - 500 mg KOH/g resin, preferably 250 - 400 mg KOH/g resin.

6. Pigment preparation as claimed in one of the preceding claims
**characterised in that**
the binding agent has a hydroxyl group content of 0 - 25 mg KOH/g binding agent.

7. Pigment preparation as claimed in one of the preceding claims
**characterised in that**
the pigment preparation contains 0 - 25 % by weight of at least one additive.

8. Pigment preparation as claimed in one of the preceding claims
**characterised in that**
the binding agent is a modified or functionalised binding agent from the group comprising maleic resins.

9. Pigment preparation as claimed in one of the preceding claims
**characterised in that**
the compacted form is selected from the group comprising granulates, pellets, briquettes, chips, tablets, sausages and mixtures thereof.

10. Method of producing a pigment preparation as claimed in one of the preceding claims,
**characterised in that**
it comprises the following steps:
a) mixing a metal effect pigment having at least one low refractive layer on the metallic core of the metal effect pigment, the refractive index of the low refractive layer being less than 2.2 and the low refractive layer containing or comprising at least one inorganic component, having at least one binding agent free of styrene groups which has an acid number of 150 - 500 mg KOH/g binding agent and a melting point or melting range in the range of 120 - 200°C,
b) compacting the mixture obtained in step a),
c) optionally drying.

11. Method of producing a pigment preparation as claimed in claim 10,
**characterised in that**
the compacting process is selected from the group comprising tableting, briquetting, pelletizing, rolling, fluidised-bed granulating, granulating, spray granulating, extruding or combinations thereof.

12. Use of a pigment preparation as claimed in one of claims 1 to 9 in water-based or solvent-based paints, dyes, coatings, printing inks, cosmetic formulations or in plastics.

13. Coating composition, in particular paints, dyes, coatings, printing inks, cosmetic formulations or plastics, which contain a pigment preparation as claimed in one of claims 1 to 9.

14. Coating composition, in particular paints, dyes, coatings, printing inks, cosmetic formulations, as claimed in claim 13, having an aqueous base.

15. Object,
**characterised in that**
the object comprises or contains a pigment preparation as claimed in one of claims 1 to 9 or a coating composition as claimed in one of claims 13 to 14 or contains or comprises a plastic as claimed in claim 13.

## Revendications

1. Préparation pigmentaire comportant des pigments à effets métallisés sous forme compactée, **caractérisée en ce que** la préparation pigmentaire comprend les composants suivants :
a) 60-95 % en poids d'au moins un pigment à effets métallisés, qui comprend au moins une couche à faible indice de réfraction sur le noyau métallique du pigment à effets métallisés, l'indice de réfraction de la couche à faible indice de réfraction étant inférieur à 2,2, et la couche à faible indice de réfraction contenant au moins un composant organique ou en étant constituée,
b) 0,5-40 % en poids d'un liant sans groupes styrène, ayant un indice d'acide de 150 à 500 mg KOH/g de liant et un point de fusion ou une plage de fusion qui est comprise dans la plage de 120 à 200°C,
c) une teneur en humidité résiduelle comprise dans la plage de 0-15 % en poids d'eau et/ou d'un solvant organique ou d'un mélange de solvants,
d) en option, un agent de neutralisation.

2. Préparation pigmentaire selon la revendication 1, **caractérisée en ce que** le composant inorganique de la ou des couches à faible indice de réfraction sont au moins un oxyde métallique, un hydroxyde métallique et/ou un oxyde métallique hydraté.

3. Préparation pigmentaire selon la revendication 2, **caractérisée en ce que** le composant inorganique de la couche à faible indice de réfraction, ou la couche à faible indice de réfraction qui est une couche d'un oxyde métallique, d'un hydroxyde métallique et/ou d'un oxyde métallique hydraté inorganique, est choisi dans le groupe consistant en les oxydes, les hydroxydes ou les oxydes hydratés des éléments silicium, aluminium, chrome, alliages chrome-métal, vanadium, molybdène, et les mélanges de ceux-ci et les combinaisons de ceux-ci.

4. Préparation pigmentaire selon la revendication 3, **caractérisée en ce que** la couche d'un oxyde métallique, d'un hydroxyde métallique et/ou d'un oxyde métallique hydraté inorganique est choisie dans le groupe qui est constitué des oxydes, des hydroxydes ou des oxydes hydratés des éléments silicium, aluminium, chrome, alliages chrome-métal, molybdène, et les mélanges et combinaisons de ceux-ci, et présente une épaisseur de couche de 5 à 90 nm.

5. Préparation pigmentaire selon l'une des revendications précédentes, **caractérisée en ce que** le liant présente un indice d'acide supérieur à 200-500 mg KOH/g de résine, de préférence de 250-400 mg KOH/g de résine.

6. Préparation pigmentaire selon l'une des revendications précédentes, **caractérisée en ce que** le liant présente une teneur en groupes hydroxyle de 0-25 mg KOH/g de liant.

7. Préparation pigmentaire selon l'une des revendications précédentes, **caractérisée en ce que** la préparation pigmentaire contient 0-25 % en poids d'au moins un additif.

8. Préparation pigmentaire selon l'une des revendications précédentes, **caractérisée en ce que** le liant est un liant modifié ou fonctionnalisé du groupe des résines de maléate.

9. Préparation pigmentaire selon l'une des revendications précédentes, **caractérisée en ce que** la forme compactée est choisie dans le groupe consistant en les granulés, les pastilles, les briquettes, les copeaux, les comprimés, les cylindres et les mélanges de ceux-ci.

10. Procédé de fabrication d'une préparation pigmentaire selon l'une des revendications précédentes, **caractérisé en ce qu'**il comprend les étapes suivantes:
a) mélange d'un pigment à effets métallisés, qui présente au moins une couche à faible indice de réfraction sur le noyau métallique du pigment à effets métallisés, l'indice de réfraction de la couche à faible indice de réfraction étant inférieur à 2,2, et la couche à faible indice de réfraction contenant au moins un composant organique ou en étant constitué, avec au moins un liant sans groupes styrène, qui présente un indice d'acide de 150-500 mg KOH/g de liant et un point de fusion ou une plage de fusion comprise dans la plage de 120-200°C,
b) compactage du mélange obtenu dans l'étape a),
c) en option, séchage.

11. Procédé de fabrication d'une préparation pigmentaire selon la revendication 10, **caractérisé en ce que** le compactage est choisi dans le groupe consistant en le comprimage, le briquettage, le pastillage, le laminage, la granulation en lit fluidisé, la granulation, la granulation par atomisation, l'extrusion ou des combinaisons de ces techniques.

12. Utilisation d'une préparation pigmentaire selon l'une des revendications 1 à 9 dans des vernis, peintures, revêtements, encres d'imprimerie, formulations cosmétiques ou matières plastiques, à base d'eau ou d'un solvant.

13. Composition de revêtement, en particulier vernis, peintures, revêtements, encres d'imprimerie, formulations cosmétiques ou matières plastiques, qui contiennent une préparation pigmentaire selon l'une des revendications 1 à 9.

14. Composition de revêtement, en particulier vernis, peintures, revêtements, encres d'imprimerie ou formulations cosmétiques selon la revendication 13, qui sont constitués à base d'eau.

15. Objet, **caractérisé en ce que** l'objet comprend ou contient une préparation pigmentaire selon l'une des revendications 1 à 9 ou une composition de revêtement selon l'une des revendications 13 à 14, ou contient une matière plastique selon la revendication 13 ou en est constituée.
